# EUROPEAN PATENT APPLICATION

(11) **EP 3 806 411 A1**
(43) Date of publication of application: **14.04.2021**
(21) Application number: 19833884.0
(22) Date of filing: 04.07.2019
(51) Int. Cl.: H04L 12/801, H04L 12/851, H04L 12/833, H04L 12/865

(54) **MESSAGE CONTROL METHOD AND NODE DEVICE**

(30) Priority: 09.07.2018 CN 201810746527
(71) Applicant: Huawei Technologies Co., Ltd., Longgang District Shenzhen, Guangdong 518129 (CN)
(72) Inventor: SUN, Wenhao, Shenzhen, Guangdong 518129 (CN); SHEN, Li, Shenzhen, Guangdong 518129 (CN); YU, Xiang, Shenzhen, Guangdong 518129 (CN); DUATO, José, 46022 Camino de Vera, s/n Valencia (ES)
(74) Representative: Epping - Hermann - Fischer
(86) International application number: PCT/CN2019/094746
(87) International publication number: WO 2020/011102

(57) **Abstract**

The present invention discloses a packet control method and a node device, to improve reliability of a data flow in a transmission process. The method includes: After receiving a pause frame, a first node automatically applies, based on adjustment information that is of a send queue of a data flow and that is recorded in a state record set, the pause frame to all queues associated in an adjustment process of the send queue of the data flow. In this way, a packet loss problem in a data transmission process can be avoided without adjusting an XOFF/XON threshold of a receive queue and without increasing a quantity of pause frames in a network system, thereby improving reliability of the data flow in the transmission process.

## Description

This application claims priority to Chinese Patent Application No. 201810746527.7, filed with the Chinese Patent Office on July 09, 2018 and entitled "PACKET CONTROL METHOD AND NODE DEVICE", which is incorporated herein by reference in its entirety.

### TECHNICAL FIELD

This application relates to the field of data transmission, and in particular, to a packet control method and a node device.

### BACKGROUND

A communications network is a network that uses a communications technology to interconnect a plurality of electronic devices, for example, a switching device (for example, a switch or a router), user equipment, and a transmission device (for example, an optical cable), to implement communication and information exchange.

With development of communications technologies and popularity of electronic devices, more data flows are transmitted in communications networks. Therefore, how to ensure reliability of a data flow in a transmission process and avoid a packet loss problem is a technical problem that needs to be urgently resolved at present.

### SUMMARY

Embodiments of this application provide a packet control method and a node device, to improve reliability of a data flow in a transmission process.

According to a first aspect, an embodiment of this application provides a packet control method. The method includes the following steps. A first node sends a packet of a data flow to a second node by using at least two queues. In a packet sending process, the first node receives, from the second node, a pause frame that is used to instruct to suspend sending of a packet in a first queue in the at least two queues, so that the first node suspends sending of the packet in the first queue and sending of a packet in a second queue based on the pause frame, where some packets in the first queue and some packets in the second queue belong to a same data flow.

In the foregoing technical solution, after receiving the pause frame, the first node automatically applies, based on adjustment information that is of a send queue of a data flow and that is recorded in a state record set, the pause frame to all queues associated in an adjustment process of the send queue of the data flow. In this way, a packet loss problem in a data transmission process can be avoided without adjusting an XOFF/XON threshold of a receive queue and without increasing a quantity of pause frames in a network system, thereby improving reliability of the data flow in the transmission process.

In a possible design, the at least two queues include at least two priorities, a priority of the first queue is a first priority, a priority of the second queue is a second priority, and the first priority is different from the second priority.

In the foregoing technical solution, priorities may be set for the at least two queues used for communication between the first node and the second node. Correspondingly, the pause frame may also be used to instruct to suspend sending of a packet in a queue with a specific priority. In this way, a quantity of indication manners of the pause frame can be increased, and flexibility of the packet control method can be improved.

In a possible design, the first node queries a first state record set that is used to record that some packets in the first queue and some packets in the second queue belong to a same data flow, to suspend sending of the packet in the second queue.

In the foregoing technical solution, the first node may record in advance a state of a packet in each queue, for example, whether packets of a same data flow are stored in two queues. In this way, when receiving a pause frame instructing to suspend sending of a packet in a queue, the first node may directly query the first state record set to determine whether the second queue needs to be suspended and which queue of the at least two queues the second queue specifically is. An implementation is simple.

In a possible design, the first node may determine the first state record set in, but not limited to, the following two manners.

First manner: The first node determines, in a second state record set, the first state record set corresponding to the first queue.

In the foregoing technical solution, the first node may record, in a unit of queue, a state corresponding to a queue, to form the second state record set. For example, a correspondence between each queue and a state may be recorded, and the state means whether some packets in the queue and some packets in another queue belong to a same data flow. When the first node needs to query a state of the first node, the first node first finds, from the second state record set, a state record subset corresponding to the first queue, that is, the first state record set, and then determines the second queue based on the first state record set.

### Second manner:

The first node determines, in a second state record set, the first state record set corresponding to a data flow in the first queue.

In the foregoing technical solution, the first node may record, in a unit of data flow, a state corresponding to a data flow, to form the second state record set. For example, a correspondence between each data flow and a state may be recorded, and the state means whether packets of the data flow are stored in at least two queues. When the first node needs to query a state of the first node, the first node first finds, from the second state record set, a state record subset corresponding to a data flow carried in the first queue, that is, the first state record set, and then determines the second queue based on the first state record set.

In this way, the first node can determine the first state record set in a plurality of manners based on different forms of the second state record set, so that flexibility of the packet control method can be improved.

In a possible design, the first state record set is further used to record that some packets in the first queue and some packets in a third queue belong to a same data flow, and the first node suspends sending of a packet in the third queue. In the foregoing technical solution, packets of one data flow may be stored in more than two queues. For example, the packets of the data flow may be stored in the first queue, the second queue, and the third queue. In this case, the first node may also suspend sending of the data flow in the third queue based on the pause frame. In this way, when packets of a same data flow are stored in a plurality of queues, pause processing may be performed on the plurality of queues. This can avoid an overflow of packets sent in the plurality of queues, and can further improve packet transmission reliability.

In a possible design, after obtaining the packet, the first node determines that the data flow to which the packet belongs corresponds to the first queue. However, due to some factors such as congestion of the first queue or change of a type of the data flow, the first node determines that the packet needs to be stored in the second queue. Then, if the first node determines that the second queue has no packet of the data flow to which the packet belongs, the first node records the first state record set. Alternatively, after obtaining the packet, the first node determines that the data flow to which the packet belongs corresponds to the second queue. However, due to some factors such as congestion of the second queue or change of a type of the data flow, the first node determines that the packet needs to be stored in the first queue. Then, if the first node determines that the first queue has no packet of the data flow to which the packet belongs, the first node records the first state record set.

In the foregoing technical solution, when determining that a queue in which a data flow is stored changes, the first node records the state, and generates the first state record set, so that after receiving the pause frame, the first node determines the second queue based on the first state record set.

In a possible design, after the first node stores the packet in the second queue, if the first queue has no packet belonging to the data flow to which the packet belongs, the first node deletes the first state record set from the second state record set or the first node changes the first state record set. Alternatively, after the first node stores the packet in the first queue, if the second queue has no packet belonging to the data flow to which the packet belongs, the first node deletes the first state record set from the second state record set or the first node changes the first state record set. The changing, by the first node, the first state record set includes: modifying a first flag in the first state record set to a second flag, where the first flag is used to indicate that the first queue is being switched, and the second flag is used to indicate that the first queue is not switched; or modifying a first flag in the first state record set to a second flag, where the first flag is used to indicate that a data flow in the first queue is being switched, and the second flag is used to indicate that a data flow in the first queue is not switched.

In the foregoing technical solution, the first node changes the second state record set and the first state record set depending on whether a queue in which a data flow is stored changes, so that content recorded in the first state record set and the second state record set is synchronized with an actual situation. This can improve accuracy of determining the second queue by the first node.

In a possible design, the first node determines that duration for suspending sending of the packets in the first queue and the second queue is greater than or equal to duration indicated in the pause frame, and the first node resumes sending of the packets in the first queue and the second queue.

In the foregoing technical solution, the first node may count time for suspending the first queue and the second queue. When the duration reaches the pause duration indicated in the pause frame, the first node may perform control to resume sending of the packets in the first queue and the second queue. This can improve flexibility of the packet control method.

According to a second aspect, an embodiment of this application provides a node device. The node device may be a first node, or may be an apparatus in a first node. The node device may include a communications module and a processing module. The modules may perform corresponding functions in any design example of the first aspect.

Details are as follows:
Under control of the processing module, the communications module sends a packet of a data flow to a second node by using at least two queues.

The communications module receives a pause frame from the second node under control of the processing module, where the pause frame is used to instruct to suspend sending of a packet in a first queue in the at least two queues. The processing module suspends sending of the packet in the first queue, and suspends sending of a packet in a second queue, where some packets in the first queue and some packets in the second queue belong to a same data flow.

In a possible design, the processing module is configured to: query a first state record set, where the first state record set is used to record that some packets in the first queue and some packets in the second queue belong to a same data flow; and suspend sending of the packet in the second queue based on the first state record set.

In a possible design, the processing module is configured to determine, in a second state record set, the first state record set corresponding to the first queue.

In a possible design, the processing module is configured to determine, in a second state record set, the first state record set corresponding to a data flow in the first queue.

In a possible design, the first state record set is further used to record that some packets in the first queue and some packets in a third queue belong to a same data flow, and the processing module is configured to: suspend sending of a packet in the third queue.

In a possible design, the processing module is configured to: obtain a packet before the state record set is queried, where a data flow to which the packet belongs corresponds to the first queue; and record the first state record set if the packet is stored in the second queue, and the second queue has no packet of the data flow to which the packet belongs; or
obtain a packet before the state record set is queried, where a data flow to which the packet belongs corresponds to the second queue; and record the first state record set if the packet is stored in the first queue, and the first queue has no packet of the data flow to which the packet belongs.

In a possible design, the processing module is configured to: after the packet is stored in the second queue, if the first queue has no packet belonging to the data flow to which the packet belongs, delete the first state record set from the second state record set or change the first state record set; or
after the packet is stored in the first queue, if the second queue has no packet belonging to the data flow to which the packet belongs, delete the first state record set from the state record set or change the first state record set, where
the changing the first state record set includes:
   modifying a first flag in the first state record set to a second flag, where the first flag is used to indicate that the first queue is being switched, and the second flag is used to indicate that the first queue is not switched; or
   modifying a first flag in the first state record set to a second flag, where the first flag is used to indicate that a data flow in the first queue is being switched, and the second flag is used to indicate that a data flow in the first queue is not switched.

In a possible design, the processing module is configured to: after sending of the packet in the first queue is suspended, and sending of the packet in the second queue is suspended, determine that duration for suspending sending of the packets in the first queue and the second queue is greater than or equal to duration indicated in the pause frame; and resume sending of the packets in the first queue and the second queue.

According to a third aspect, an embodiment of this application provides a node device. The device includes a processor, configured to implement the method described in the first aspect. The device may further include a memory, configured to store a program instruction and data. The memory is coupled to the processor. The processor may invoke and execute the program instruction stored in the memory, to implement the method described in the first aspect. The apparatus may further include a communications interface, and the communications interface is used for communication between the apparatus and another device. For example, the another device is a second node.

In a possible design, the device includes:
a communications interface, configured to: under control of a processor, send a packet of a data flow to a second node by using at least two queues; and receive a pause frame from the second node under control of the processor, where the pause frame is used to instruct to suspend sending of a packet in a first queue in the at least two queues; and
the processor, configured to: suspend sending of the packet in the first queue, and suspend sending of a packet in a second queue, where some packets in the first queue and some packets in the second queue belong to a same data flow.

In a possible design, the processor is configured to: query a first state record set, where the first state record set is used to record that some packets in the first queue and some packets in the second queue belong to a same data flow; and suspend sending of the packet in the second queue based on the first state record set.

In a possible design, the processor is configured to determine, in a second state record set, the first state record set corresponding to the first queue.

In a possible design, the processor is configured to determine, in a second state record set, the first state record set corresponding to a data flow in the first queue.

In a possible design, the first state record set is further used to record that some packets in the first queue and some packets in a third queue belong to a same data flow, and the processor is configured to suspend sending of a packet in the third queue.

In a possible design, the processor is configured to: obtain a packet before the state record set is queried, where a data flow to which the packet belongs corresponds to the first queue; and record the first state record set if the packet is stored in the second queue, and the second queue has no packet of the data flow to which the packet belongs; or
obtain a packet before the state record set is queried, where a data flow to which the packet belongs corresponds to the second queue; and record the first state record set if the packet is stored in the first queue, and the first queue has no packet of the data flow to which the packet belongs.

In a possible design, the processor is configured to: after the packet is stored in the second queue, if the first queue has no packet belonging to the data flow to which the packet belongs, delete the first state record set from the second state record set or change the first state record set; or
after the packet is stored in the first queue, if the second queue has no packet belonging to the data flow to which the packet belongs, delete the first state record set from the state record set or change the first state record set, where
the changing the first state record set includes:
   modifying a first flag in the first state record set to a second flag, where the first flag is used to indicate that the first queue is being switched, and the second flag is used to indicate that the first queue is not switched; or
   modifying a first flag in the first state record set to a second flag, where the first flag is used to indicate that a data flow in the first queue is being switched, and the second flag is used to indicate that a data flow in the first queue is not switched.

In a possible design, the processor is configured to: after sending of the packet in the first queue is suspended, and sending of the packet in the second queue is suspended, determine that duration for suspending sending of the packets in the first queue and the second queue is greater than or equal to duration indicated in the pause frame; and resume sending of the packets in the first queue and the second queue.

According to a fourth aspect, an embodiment of this application provides a computer-readable storage medium. The computer-readable storage medium stores a computer program, the computer program includes a program instruction, and when the program instruction is executed by a computer, the computer is enabled to perform the method according to any one of the first aspect or the possible designs of the first aspect.

According to a fifth aspect, an embodiment of this application provides a computer program product. The computer program product stores a computer program, the computer program includes a program instruction, and when the program instruction is executed by a computer, the computer is enabled to perform the method according to any one of the first aspect or the possible designs of the first aspect.

According to a sixth aspect, this application provides a chip system. The chip system includes a processor, and may further include a memory, to implement the method according to the first aspect. The chip system may include a chip, or may include a chip and another discrete device.

For beneficial effects of the second aspect to the sixth aspect and the implementations of the second aspect to the sixth aspect, refer to descriptions of beneficial effects of the method in the first aspect and the implementations of the first aspect.

### BRIEF DESCRIPTION OF DRAWINGS

FIG. 1A to FIG. 1C are block diagrams of three network systems according to an embodiment of this application;
FIG. 2 is a schematic diagram of allocating a cache to a receive queue according to an embodiment of this application;
FIG. 3 is a flowchart of a packet control method according to an embodiment of this application;
FIG. 4A shows a first correspondence between a send queue and a receive queue according to an embodiment of this application;
FIG. 4B shows a second correspondence between a send queue and a receive queue according to an embodiment of this application;
FIG. 5A is a schematic diagram of a first adjustment manner of adjusting, by a switching device A, a queue into which a data flow is placed according to an embodiment of this application;
FIG. 5B is a schematic diagram of a second adjustment manner of adjusting, by a switching device A, a queue into which a data flow is placed according to an embodiment of this application;
FIG. 6A shows a first example of a first recording manner of a state record set according to an embodiment of this application;
FIG. 6B shows a second example of a first recording manner of a state record set according to an embodiment of this application;
FIG. 7A shows a third example of a first recording manner of a state record set according to an embodiment of this application;
FIG. 7B shows a fourth example of a first recording manner of a state record set according to an embodiment of this application;
FIG. 8A shows a first example of a second recording manner of a state record set according to an embodiment of this application;
FIG. 8B shows a second example of a second recording manner of a state record set according to an embodiment of this application;
FIG. 9A shows a first example of a third recording manner of a state record set according to an embodiment of this application;
FIG. 9B shows a second example of a third recording manner of a state record set according to an embodiment of this application;
FIG. 10 shows an example of a fourth recording manner of a state record set according to an embodiment of this application;
FIG. 11 shows an example of a fifth recording manner of a state record set according to an embodiment of this application;
FIG. 12 shows an example of a sixth recording manner of a state record set according to an embodiment of this application;
FIG. 13A shows a first example of a seventh recording manner of a state record set according to an embodiment of this application;
FIG. 13B shows a second example of a seventh recording manner of a state record set according to an embodiment of this application;
FIG. 14 shows an example of an eighth recording manner of a state record set according to an embodiment of this application;
FIG. 15A is a first schematic diagram of changing a state record set according to an embodiment of this application;
FIG. 15B is a second schematic diagram of changing a state record set according to an embodiment of this application;
FIG. 16 is a third schematic diagram of changing a state record set according to an embodiment of this application;
FIG. 17 is a schematic diagram of a first manner of sending, by a switching device B, a pause frame to a switching device A according to an embodiment of this application;
FIG. 18 is a schematic diagram of a second manner of sending, by a switching device B, a pause frame to a switching device A according to an embodiment of this application;
FIG. 19 is a schematic diagram of a third manner of sending, by a switching device B, a pause frame to a switching device A according to an embodiment of this application;
FIG. 20 is a schematic diagram of a packet loss status when a send queue of a packet of a data flow is adjusted according to an embodiment of this application;
FIG. 21 is a schematic structural diagram of a node device according to an embodiment of this application; and
FIG. 22 is a schematic structural diagram of another node device according to an embodiment of this application.

### DESCRIPTION OF EMBODIMENTS

To make the objectives, technical solutions, and advantages of the embodiments of this application clearer, the following describes the technical solutions in the embodiments of this application in detail with reference to the accompanying drawings in this specification and specific implementations.

The term "and/or" in this specification describes only an association relationship for describing associated objects and represents that three relationships may exist. For example, A and/or B may represent the following three cases: only A exists, both A and B exist, and only B exists. In addition, the character "/" in this specification generally indicates an "or" relationship between associated objects, unless otherwise specified.

In addition, it should be understood that "a plurality of' in the embodiments of this application is two or more. Words such as "first" and "second" are merely used for distinction and description, and shall not be understood as an indication or implication of relative importance or an indication or implication of an order.

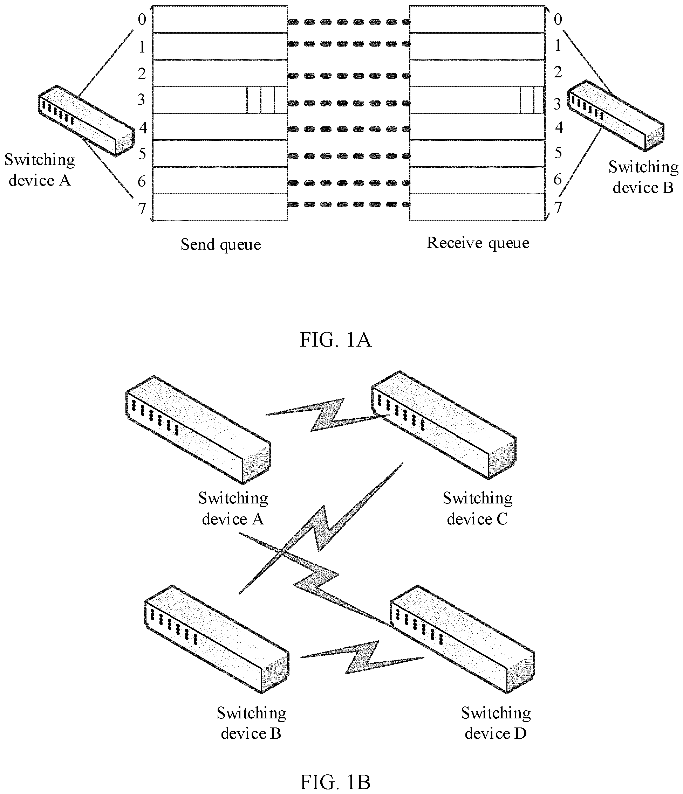

An embodiment of this application provides a packet control method, and the method is applied to a network system shown in FIG. 1A to FIG. 1C. As shown in FIG. 1A, the network system includes two switching devices, which are respectively marked as a switching device A and a switching device B. A plurality of virtual channels are created on a communications link between the switching device A and the switching device B, so that a data flow is sent and received through the plurality of virtual channels. In FIG. 1A, an example in which eight virtual channels are created on the communications link is used for description. Eight queues are set on a communications port of each of the switching device A and the switching device B. For example, eight send queues are set on the communications port of the switching device A, eight receive queues are set on the communications port of the switching device B, and the eight send queues are in a one-to-one correspondence with the eight receive queues, so that the eight virtual channels are formed on the communications link. When the switching device A needs to send a data flow to the switching device B, the switching device A successively arranges packets of the data flow in one of the eight send queues. For example, a corresponding queue identifier, for example, a queue 3, is pre-allocated to the data flow. After obtaining a packet of the data flow, the switching device A determines, based on the queue identifier corresponding to the data flow, to place the packet into a send queue, for example, a send queue 3. Then, the switching device B receives the packet of the data flow from a receive queue 3.

The switching device B may also send a data flow to the switching device A. In this case, the switching device B sends the data flow to the switching device A in the same manner described above. Details are not described herein again.

Different from that in FIG. 1A, the network system shown in FIG. 1B may alternatively include more than two switching devices, for example, include a switching device A, a switching device B, a switching device C, and a switching device D. The switching device A and the switching device B may separately communicate with the switching device C and the switching device D. It may be understood that the communication refers to sending and receiving a data flow. In this case, the switching device A establishes eight virtual channels with each of the switching device C and the switching device D for communication, and the switching device B establishes eight virtual channels with each of the switching device C and the switching device D for communication, as shown in FIG. 1B. A method for communication between each pair of switching devices is the same as that for communication between the switching device A and the switching device B in FIG. 1A. Details are not described herein again.

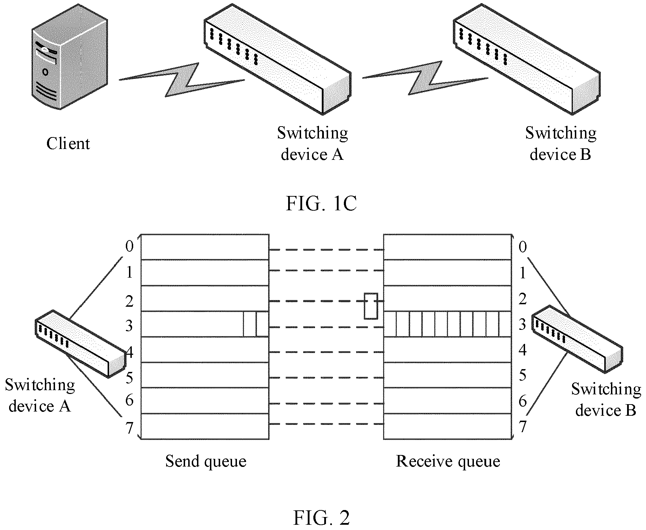

Different from that in FIG. 1A, the network system shown in FIG. 1C may further include user equipment, for example, a client. The client is connected to a switching device A. The client may send a data flow to a switching device A and receive a data flow from the switching device A. A method for communication between the client and the switching device A is the same as that for communication between the switching device A and the switching device B in FIG. 1A. Details are not described herein again.

The switching device in this embodiment of this application may be a hub, an Ethernet switch, a telephone voice switch, a fibre channel switch, a switching node, or another electronic device that can provide an exclusive electrical signal channel for any two nodes connected to the switching device. This is not limited in this embodiment of this application.

The client in this embodiment of this application may be a server for a function, for example, a server configured to store data. The client may be a device on which client software is installed. The device may be a computer, a mobile terminal, or the like, or may be a logical concept, for example, a software module or a virtual machine implemented through virtualization. This is not limited in this embodiment of this application.

It should be noted that the network system shown in FIG. 1A to FIG. 1C may be a data center network, for example, may be a data center that uses a network architecture such as a CLOS architecture, a Mesh architecture, or a Torus architecture. Alternatively, the network system may be a non-data center network, for example, may be another non-data center network that uses the foregoing architecture. Certainly, the network system may alternatively be any network in which a data flow needs to be transmitted. This is not limited herein. A quantity of clients and a quantity of switching devices included in the network system are merely examples, and this embodiment of this application is not limited thereto. For example, the network system may alternatively include a plurality of clients, or include more switching devices. Types of the switching devices may be the same or may be different. For example, the switching devices may be a plurality of different types of switches such as a TOR switch and a spine switch. For brevity, the switching devices are not described one by one in the figures. In addition, in the network system shown in FIG. 1A to FIG. 1C, although the client and the plurality of switching devices are shown, the network system may not be limited to including the client and the switching devices, for example, may further include a core network device or a device configured to bear a virtualized network function. These are obvious for a person of ordinary skill in the art, and examples are not listed one by one herein.

The example in FIG. 1A in which the switching device A sends a packet of a data flow to the switching device B by using the send queue 3 and the switching device B receives the packet of the data flow by using the receive queue 3 is used. The switching device B allocates a cache to each receive queue, for example, allocates a cache with a size of 100 KB to 200 KB to each receive queue, or allocates a cache with a different size to each receive queue based on a usage status of the receive queue. For example, when only four of the eight receive queues are occupied, smaller caches may be allocated to unused receive queues, and most caches are allocated to the four used receive queues. In FIG. 2, an example in which a cache with a size of 100 KB is allocated to each receive queue is used. In this case, if a size of a packet stored in the receive queue 3 of the switching device B exceeds 100 KB, the switching device B can no longer store a packet sent by the switching device A. Therefore, when the switching device A continues to send a packet to the switching device B, the subsequent packet overflows, resulting in packet loss.

In view of this, an embodiment of this application provides a packet control method, to resolve a packet loss problem in a data flow transmission process.

The following describes the technical solutions provided in the embodiments of this application, with reference to the accompanying drawings. In the following description process, an example in which the technical solutions provided in this application are applied to the network system shown in FIG. 1A is used for description.

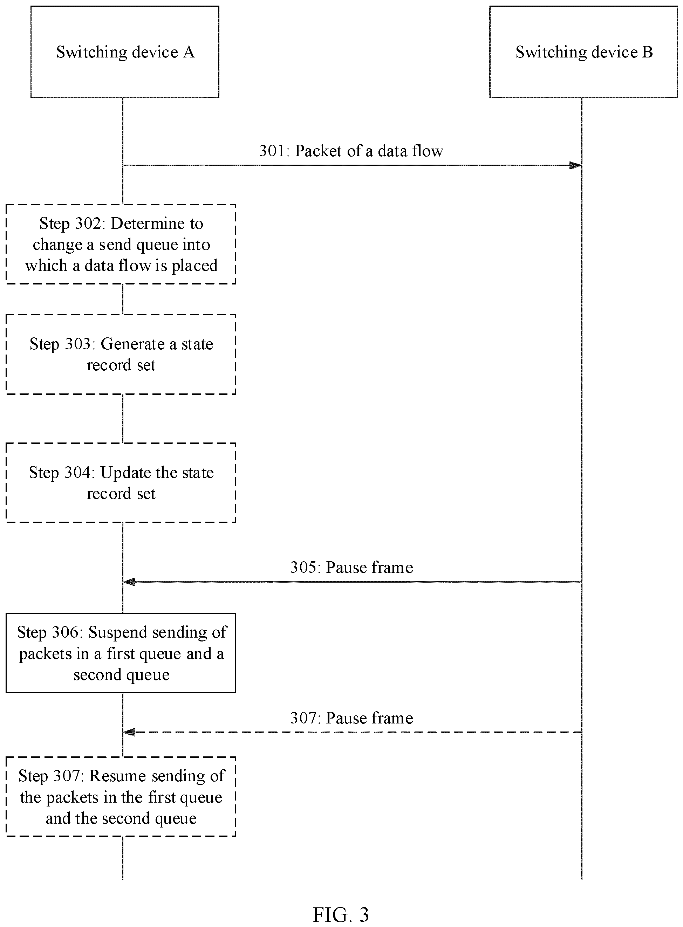

FIG. 3 is a flowchart of a packet control method according to an embodiment of this application. Descriptions of the flowchart are as follows:
Step 301: A first node sends a packet of a data flow to a second node, and the second node receives the packet.

In the following descriptions, an example in which the first node is the switching device A in FIG. 1A, the second node is the switching device B in FIG. 1A, and the switching device A sends the packet of the data flow to the switching device B by using the eight send queues in FIG. 1A is used for description.

In this embodiment of this application, the packet sent by the switching device A to the switching device B may be a packet of log information stored in the switching device A, a packet of cached data, or the like. Certainly, the packet may alternatively be a packet of another data flow. This is not limited herein. It should be noted that in another scenario, for example, in the network system shown in FIG. 1C, the packet may alternatively be a packet of a data flow received from another device. For example, the packet may be a packet of a data flow received from a client. In the following descriptions, an example in which the switching device A sends a packet of a data flow 1 and a packet of a data flow 2 to the switching device B is used.

After obtaining a packet that needs to be sent to the switching device B, the switching device A places the packet into a corresponding send queue. Specifically, after receiving the first packet of a data flow, the switching device A first determines the data flow to which the packet belongs, for example, determines, by using identification information carried in the packet, the data flow to which the packet belongs, and then allocates a corresponding send queue to the data flow according to a preset policy, to place the packet into the send queue corresponding to the data flow to which the packet belongs.

In this embodiment of this application, the preset policy may include but is not limited to the following three cases.

### First preset policy:

The switching device A randomly allocates a send queue to the data flow. For example, the switching device A may randomly select two send queues from the eight send queues to send the data flow 1 and the data flow 2. For example, the switching device A randomly selects a send queue 2 to send the data flow 1, and selects a send queue 4 to send the data flow 2.

### Second preset policy:

The switching device A may preferentially set a priority for each send queue, and select a proper send queue from the eight send queues based on information such as importance or emergency degrees of the data flow 1 and the data flow 2. For example, priority levels of a send queue 0 to a send queue 7 are set as a priority 0 to a priority 7 in sequence, where the priority 7 is the highest priority level. In this way, when the switching device A determines that the data flow 1 is more urgent than the data flow 2, the switching device A may select a send queue with a higher priority level to send the data flow 1, and select a send queue with a lower priority level to send the data flow 2. For example, the switching device A selects the send queue 7 to send the data flow 1, and selects the send queue 4 to send the data flow 2.

### Third preset policy:

The switching device A may preset a priority for each send queue, and set a determining method for determining a priority level of a data flow. When a data flow needs to be sent, a priority level of the data flow that needs to be sent is determined according to the determining method. Then, a send queue is allocated to each data flow based on a preset mapping relationship between a priority of the data flow and a priority of a send queue used to send the data flow. For example, priority levels of a send queue 0 to a send queue 7 are set as a priority 0 to a priority 7 in sequence, and the determining method for determining a priority level of a data flow is determining a priority based on a type of the data flow. When the data flow is a data flow of a video type, it is determined that a priority of the data flow is the priority 0. When the data flow is a data flow of an audio type, it is determined that a priority of the data flow is the priority 1.

When the data flow is a data flow of a picture type, it is determined that a priority of the data flow is the priority 2. In addition, the priority of the data flow is set to be the same as a priority of a send queue used to send the data flow. In this way, after determining priority levels of the data flow 1 and the data flow 2, the switching device A determines, based on the priority levels of the data flows, send queues used to send the data flows. For example, if the priority level of the data flow 1 is the priority 1, the switching device A determines to use the send queue 1 to send the data flow 1. If the priority level of the data flow 2 is the priority 4, the switching device A determines to use the send queue 4 to send the data flow 2.

It should be noted that, the switching device A may further set another determining method for determining a priority level of a data flow. For example, a priority of a data flow may be determined based on a size of the data flow. For example, when a size of a data flow is less than or equal to 100 MB, it is determined that a priority of the data flow is 2. When a size of a data flow is greater than 100 MB and less than 200 MB, it is determined that a priority of the data flow is 1. When a size of a data flow is greater than or equal to 200 MB, it is determined that a priority of the data flow is 0. Certainly, another determining method may also be set. This is not limited herein.

Certainly, a mapping relationship between a priority of a data flow and a priority of a send queue used to send the data flow may be in another form. For example, the mapping relationship may be: When a priority of a data flow is a priority 0, a corresponding send queue priority is a priority 2; when a priority of a data flow is a priority 1, a corresponding send queue priority is a priority 4; when a priority of a data flow is a priority 2, a corresponding send queue priority is a priority 3; when a priority of a data flow is a priority 3, a corresponding send queue priority is a priority 0; and so on. In this way, after determining the priority levels of the data flow 1 and the data flow 2, the switching device A determines, based on the mapping relationship, a send queue corresponding to each data flow.

It should be noted that, the switching device A may also set a same priority level for a plurality of send queues. For example, in the eight send queues, priority levels corresponding to the send queue 0 and the send queue 1 are set to a priority 0, priority levels corresponding to the send queue 2 to the send queue 4 are set to a priority 1, priority levels corresponding to the send queue 5 and the send queue 6 are set to a priority 2, and a priority level corresponding to the send queue 7 is set to a priority 3. In this case, after determining a priority level of a send queue corresponding to a data flow that needs to be sent, the switching device A may randomly select one send queue from a plurality of send queues with the same priority level. For example, if the switching device A determines that a priority level of a send queue corresponding to the data flow 1 is the priority 1, the switching device randomly selects one send queue, such as the send queue 4, from the send queue 2 to the send queue 4, to determine to send the data flow 1 by using the send queue 4.

For ease of description, the following uses an example in which the switching device A determines to send the data flow 1 by using the send queue 2 and send the data flow 2 using the send queue 4. In this case, after receiving a packet, if determining that a data flow to which the packet belongs is the data flow 1, the switching device A places the packet into the send queue 2; or if determining that a data flow to which the packet belongs is the data flow 2, the switching device A places the packet into the send queue 4. The switching device A may record a correspondence between each data flow and a send queue. For example, the data flow 1 corresponds to the send queue 2, and the data flow 2 corresponds to the send queue 4. In this way, after obtaining a packet of the data flow 1 and a packet of the data flow 2 again, the switching device A determines, based on the recorded correspondence, a send queue into which the packet is to be placed.

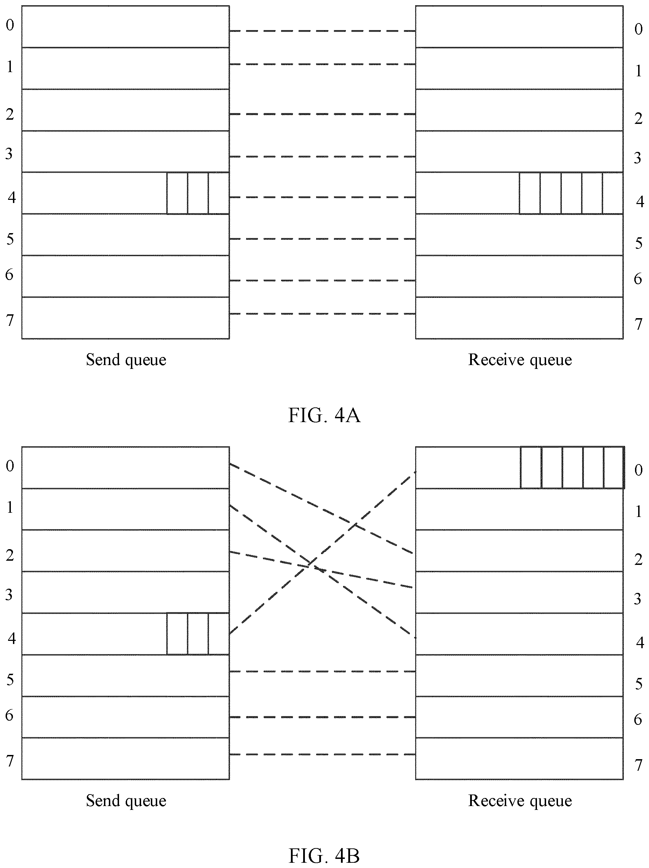

After the switching device A places the packet into the corresponding send queue, the switching device A sends the packet to the switching device B by scheduling the send queue, and the switching device B receives, based on a corresponding receive queue, the packet of the data flow that is sent by the switching device A. For example, if the switching device A sets a priority for each send queue, the switching device B may also set a priority for each receive queue. For example, priorities of a receive queue 0 to a receive queue 7 are 0 to 7 in sequence. In this way, the switching device B may receive a packet by using a receive queue whose priority is the same as that of a send queue. For example, if the switching device A sends a packet of the data flow 2 by using the send queue 4 whose priority is 4, the switching device B receives the packet by using the receive queue 4 whose priority is 4, as shown in FIG. 4A. Certainly, there may be another mapping relationship between a priority of a send queue and a priority of a receive queue. For example, the switching device A and the switching device B agree on the following in advance: receiving, by using a receive queue whose priority is 2, a packet sent by using a send queue whose priority is 0; receiving, by using a receive queue whose priority is 4, a packet sent by using a send queue whose priority is 1; receiving, by using a receive queue whose priority is 3, a packet sent by using a send queue whose priority is 2; receiving, by using a receive queue whose priority is 0, a packet sent by using a send queue whose priority is 4; and the like. In this way, when the switching device A sends the packet of the data flow 2 by using the send queue 4 whose priority is 4, the switching device B receives the packet by using the receive queue 0 whose priority is 0, as shown in FIG. 4B. For ease of description, in the following descriptions, an example in which the switching device B receives a packet by using a receive queue whose priority is the same as that of a send queue is used.

It should be noted that when the switching device A sends a packet by using a send queue, the packet carries identification information of the send queue. For example, the packet may carry priority information of the send queue, so that the switching device B may determine, by detecting the identification information in the packet, which receive queue is used to receive the packet.

Step 302: The switching device A determines to change a send queue into which the data flow is placed.

In this embodiment of this application, in a transmission process of the data flow, there is a case in which the send queue into which the data flow is placed needs to be changed.

For example, for ease of scheduling, in a process in which the switching device A sends a data flow, a send queue of each data flow may be adjusted in real time by monitoring a size of the data flow or a congestion status of the send queue. The following separately describes the two adjustment manners.

### First adjustment manner:

The switching device A may divide the eight send queues into two types: a send queue used to transmit a large data flow and a send queue used to transmit a small data flow. For example, the send queue 0 to the send queue 3 are used to transmit a small data flow, and the send queue 4 to the send queue 7 are used to transmit a large data flow. When a sum of sizes of packets of a data flow transmitted by the switching device A reaches a first threshold, for example, the first threshold may be 100 KB, the switching device A determines that the data flow is a large data flow, and therefore places the packet of the data flow into a send queue used to transmit a large data flow.

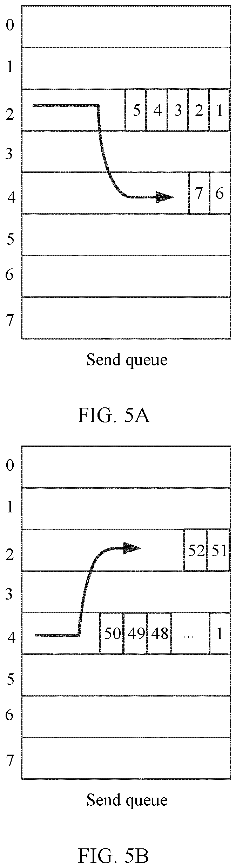

The data flow 1 is used as an example for description. The switching device A determines, by using the method in step 301, to send the data flow 1 by using the send queue 2. When the switching device A just starts to transmit the data flow 1, a quantity of transmitted packets is relatively small, for example, only three packets of the data flow 1 are transmitted, and a sum of sizes of the transmitted packets of the data flow 1 does not exceed the first threshold. In this case, the switching device A determines that the data flow 1 is a small data flow (a small flow). The send queue 2 is a send queue used to transmit a small data flow, and therefore, the switching device A does not adjust the send queue of the data flow 1. As the switching device A sends more packets of the data flow 1, for example, 100 packets of the data flow 1 are transmitted, the switching device A determines that a sum of sizes of the transmitted packets of the data flow 1 exceeds the first threshold, and the switching device A determines that the data flow 1 is a large data flow (a large flow). In this case, the switching device A determines to send the data flow 1 by using a send queue used to transmit a large data flow. Send queues used to transmit a large data flow are the send queue 4 to the send queue 7, and therefore, the switching device A determines to adjust the send queue into which the data flow 1 is placed, that is, adjust the send queue of the data flow 1 from the send queue 2 to one of the send queue 4 to the send queue 7, for example, to the send queue 4. In this way, a subsequent packet of the data flow 1 is placed into the send queue 4. For ease of description, in FIG. 5A, an example in which it is determined, during transmission of the sixth packet of the data flow, that the send queue of the data flow needs to be switched is used.

It should be noted that in this case, it may be understood that a sum of sizes of transmitted packets of the data flow 1 includes a sum of sizes of packets that have been sent and unsent packets stored in the send queue.

### Second adjustment manner:

To isolate a congested data flow and prevent the congested data flow from hindering sending of an uncongested data flow, in this embodiment of this application, a send queue used to send a congested data flow may be set in the eight send queues. For example, the switching device A sets the send queue 0 and the send queue 1 as send queues used to send a congested data flow, and the remaining send queues are send queues used to send an uncongested data flow.

When the switching device A determines that a sum of sizes of unsent packets stored in the send queue reaches a second threshold, for example, the second threshold may be 50 KB, the switching device A determines that a data flow to which a packet that is enqueued at this moment belongs is a congested data flow, so that a subsequent packet of the data flow is placed into a send queue used to transmit a congested data flow.

The data flow 2 is used as an example for description. The switching device A determines, by using the method in step 301, to send the data flow 2 by using the send queue 4. When the switching device A just starts to transmit the data flow 2, relatively few data flows are transmitted in a network system, and all packets of the data flow 2 can be scheduled in a timely manner. In this case, the switching device A determines that a sum of sizes of unsent packets in the send queue 4 does not exceed the second threshold, and the switching device A determines that the data flow 2 is an uncongested data flow. The send queue 4 is a send queue used to transmit an uncongested data flow, and therefore, the switching device A does not adjust the send queue of the data flow 2. As data flows sent in the network system increase, packets of the data flow 2 are backlogged in the send queue 4, and consequently, unsent packets of the data flow 2 in the send queue 4 increase. For example, when a packet of the data flow 2 enters the send queue 4, there are 50 unsent packets in the send queue 4. In addition, if the switching device A determines that a sum of sizes of the 50 packets exceeds the second threshold, the switching device A determines that the data flow 2 is a congested data flow. In this case, the switching device A determines to send the data flow 2 by using a send queue used to transmit a congested data flow. The send queues used to transmit a congested data flow are the send queue 0 and the send queue 1, and therefore, the switching device A determines to adjust the send queue into which the data flow 2 is placed, that is, adjust the send queue of the data flow 2 from the send queue 4 to one of the send queue 0 and the send queue 1, for example, to the send queue 1. In this way, a subsequent packet of the data flow 2 is placed into the send queue 1, as shown in FIG. 5B.

It should be noted that the switching device A may alternatively determine, in another manner, the send queue into which the data flow is placed. In this embodiment of this application, the foregoing two adjustment manners are used merely as examples for description, and shall not be construed as a limitation on this application.

In the following descriptions, an example in which the send queue of the data flow 1 is adjusted from the send queue 2 to the send queue 4, and the send queue of the data flow 2 is adjusted from the send queue 4 to the send queue 1 is used for description.

Step 303: The switching device A generates a state record set.

After the switching device A determines to adjust a send queue of a data flow, the switching device A records content of the adjustment. In this embodiment of this application, the switching device A performs recording by using the state record set. The state record set may be a table, or may be a description file. Certainly, the state record set may alternatively be in another form. This is not limited herein.

After obtaining a packet of a data flow, the switching device A determines, by performing step 301, that the data flow to which the packet belongs corresponds to a first queue. Then, the switching device A determines, by performing step 302, that the packet needs to be placed into a second queue different from the first queue, and the second queue has no packet of the data flow to which the packet belongs. Then, the switching device A records the adjustment content. It should be noted that, that the data flow to which the packet belongs corresponds to the first queue may be understood as that an original queue into which the data flow to which the packet belongs is placed is the first queue. In other words, before the first packet of the data flow is enqueued, the switching device A determines to place the data flow into the first queue. Then, the switching device A records information about the queue into which the data flow is placed. After obtaining a subsequent packet of the data flow, the switching device queries the recorded information, and determines that the packet corresponds to the first queue.

It should be noted that the first queue may be understood as follows: When the switching device A receives a packet of the data flow for the first time, a send queue determined by the switching device A for sending the packet of the data flow is the first queue. For example, a first queue corresponding to the data flow 1 is the send queue 2, and a first queue corresponding to the data flow 2 is the send queue 4. In addition, in this case, the first queue and the second queue are in a general sense.

In addition, if in step 301, the switching device A allocates a send queue to each data flow by using the third preset policy, based on different mapping relationships between a priority of a data flow and a priority of a send queue used to send the data flow in the third preset policy, that the data flow to which the packet belongs corresponds to the first queue may be understood as either of the following two meanings: A priority of the first queue is the same as a priority of the data flow to which the packet belongs, or a priority of the first queue and a priority of the data flow to which the packet belongs satisfy a mapping relationship that is set in the third preset policy. For example, if the priority of the data flow is 0, the priority of the first queue is 2; if the priority of the data flow is 1, the priority of the first queue is 4. No further details are provided herein.

In this embodiment of this application, manners of recording the adjustment content by the switching device A may include but are not limited to the following eight manners. The following describes the eight recording manners.

### First recording manner:

The switching device A records only adjustment content of a send queue.

For example, when obtaining the sixth packet of the data flow 1, the switching device A determines to adjust the send queue of the data flow 1 from the send queue 2 to the send queue 4, and the send queue 4 has no packet of the data flow 1. Then, the switching device A records, in the state record set, identification information and an adjustment direction of the two adjusted send queues.

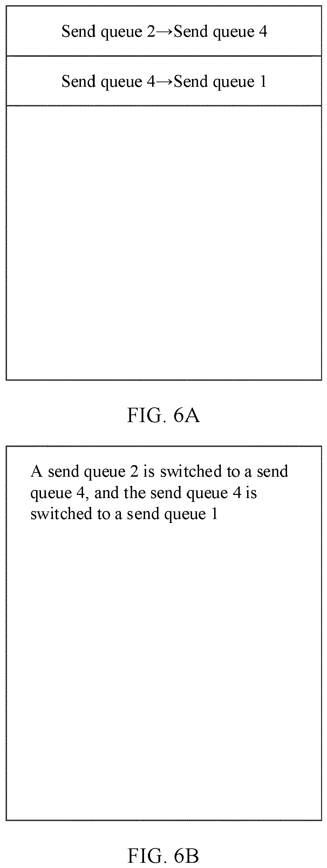

Using an example in which identification information of a send queue is a number of the send queue, the state record set may include two cases shown in FIG. 6A and FIG. 6B. In FIG. 6A, the state record set is presented in a form of a table, and in FIG. 6B, the state record set is presented in a form of a description file.

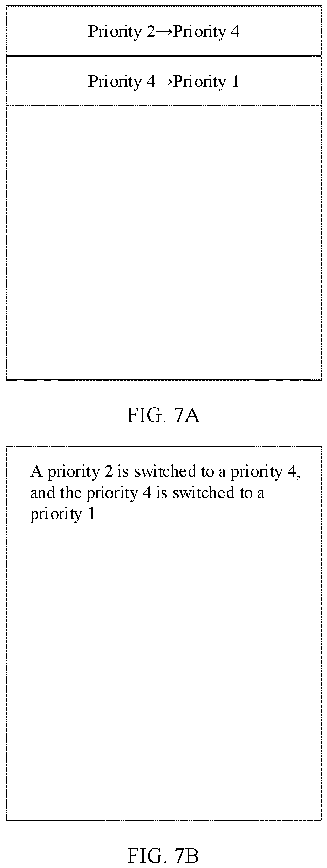

Using an example in which identification information of a send queue is a priority of the send queue, a priority of the send queue 2 is 2, and a priority of the send queue 4 is 4, the state record set may include two cases shown in FIG. 7A and FIG. 7B. In FIG. 7A, the state record set is presented in a form of a table, and in FIG. 7B, the state record set is presented in a form of a description file.

The switching device A records adjustment content of the data flow 2 in the state record set in a processing manner the same as that of the data flow 1. For details, refer to FIG. 6A to FIG. 7B. Details are not described herein again.

It should be noted that, to reduce storage space occupied by the state record set, if the switching device A adjusts send queues of a plurality of data flows, where adjustment content of some of the data flows is the same, for example, the switching device A adjusts a send queue of a data flow 3 from the send queue 2 to the send queue 4, the adjustment content may be recorded only once in the state record set.

### Second recording manner:

The switching device A records each send queue and corresponding adjustment content.

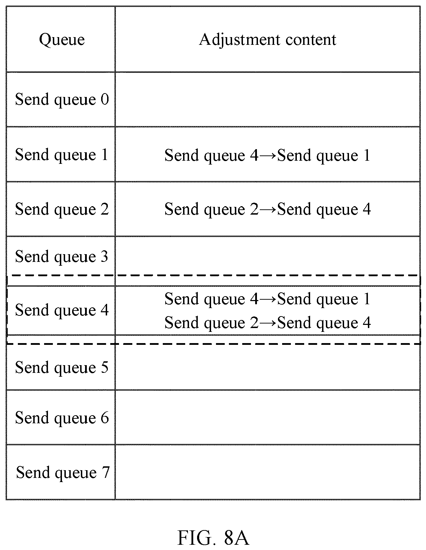

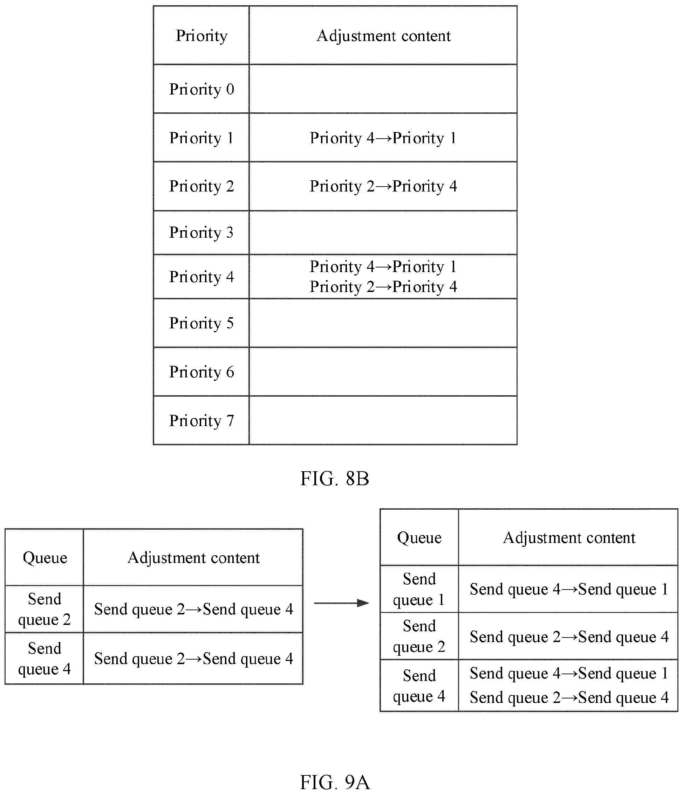

For example, the state record set may include two columns. Information about each send queue is recorded in the first column. For example, the information may be a number of the send queue, or may be a priority of the send queue. Adjustment content corresponding to the send queue is recorded in the second column. When a send queue has no corresponding adjustment content, "null" or "none" may be recorded in the adjustment content corresponding to the send queue, or no record may be made. As shown in FIG. 8A or FIG. 8B, when the send queue of the data flow 1 is adjusted from the send queue 2 to the send queue 4, adjustment content corresponding to the send queue 2 and adjustment content corresponding to the send queue 4 are separately recorded in the state record set; when the send queue of the data flow 2 is adjusted from the send queue 4 to the send queue 1, adjustment content corresponding to the send queue 1 is recorded in the state record set, and content of adjustment from the send queue 4 to the send queue 1 is added to the adjustment content corresponding to the send queue 4. In FIG. 8A, an example in which information about a send queue is a number of the send queue is used. In FIG. 8B, an example in which information about a send queue is a priority of the send queue is used.

### Third recording manner:

To reduce storage space occupied by the state record set, the switching device A records only information about an adjusted send queue and corresponding adjustment content.

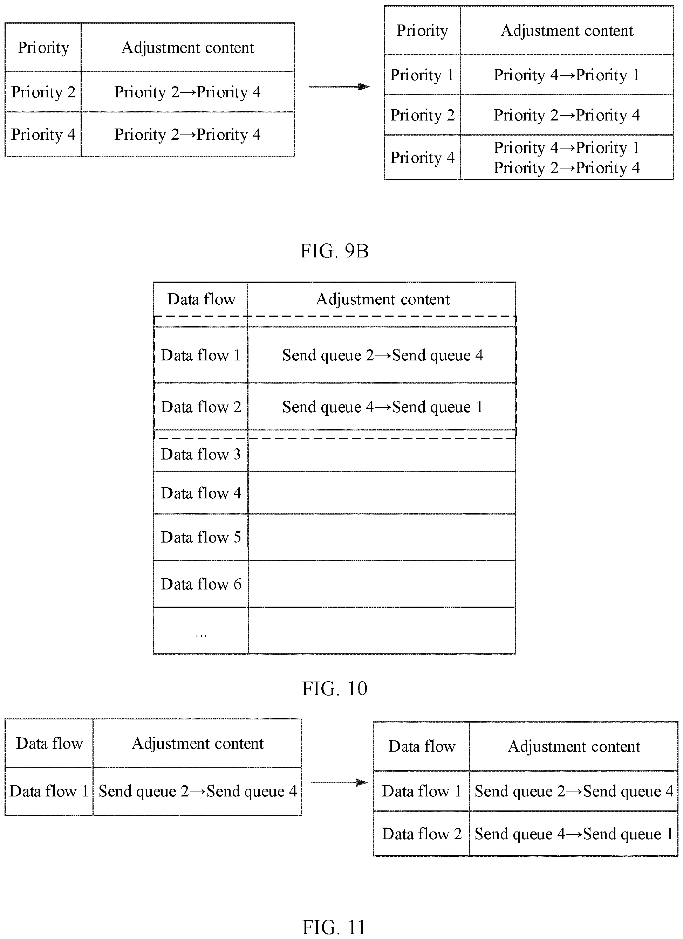

In this recording manner, adjustment content recorded in the state record set is the same as that in the second recording manner, and details are not described herein again. A difference between the second recording manner and the third recording manner lies in that, in the second recording manner, because adjustment content corresponding to each send queue needs to be recorded, the state record set shown in FIG. 8A or FIG. 8B fixedly occupies eight pieces of storage space, while in the third recording manner, because the switching device A records only information about an adjusted send queue and corresponding adjustment content, and adjustment of a send queue of a data flow may change in real time, a size of storage space occupied by the state record set in the third recording manner also changes in real time. For example, after the switching device A determines that the send queue of the data flow 1 is adjusted from the send queue 2 to the send queue 4, the state record set includes only adjustment content corresponding to the send queue 2 and the send queue 4; after the switching device A determines that the send queue of the data flow 2 is adjusted from the send queue 4 to the send queue 1, adjustment content corresponding to the send queue 1 is added to the state record set, as shown in FIG. 9A or FIG. 9B. In FIG. 9A, an example in which information about a send queue is a number of the send queue is used. In FIG. 9B, an example in which information about a send queue is a priority of the send queue is used.

### Fourth recording manner:

The switching device A records each data flow and corresponding adjustment content.

For example, the state record set may include two columns. Information about each data flow is recorded in the first column. For example, the information may be a number of the data flow, or may be a priority of the data flow. Adjustment content corresponding to the data flow is recorded in the second column. When a data flow has no corresponding adjustment content, "null" or "none" may be recorded in the adjustment content corresponding to the data flow, or no record may be made. As shown in FIG. 10, using an example in which information about a data flow is a number of the data flow, when the send queue of the data flow 1 is adjusted from the send queue 2 to the send queue 4, adjustment content corresponding to the data flow 1 is recorded in the state record set; when the send queue of the data flow 2 is adjusted from the send queue 4 to the send queue 1, adjustment content corresponding to the data flow 2 is recorded in the state record set. The switching device A further has a data flow 3, a data flow 4, and the like. After a send queue of a corresponding data flow is adjusted, adjustment content corresponding to the data flow needs to be recorded in the state record set.

It should be noted that information about a data flow may be alternatively represented by using a priority of the data flow. In this case, a specific form of the state record set is similar to that in FIG. 10, and details are not described herein again.

### Fifth recording manner:

To reduce storage space occupied by the state record set, the switching device A records only information about an adjusted data flow and corresponding adjustment content.

In this recording manner, adjustment content recorded in the state record set is the same as that in the fourth recording manner, and details are not described herein again. A difference between the fourth recording manner and the fifth recording manner lies in that, in the fourth recording manner, because adjustment content corresponding to each data flow needs to be recorded, the state record set shown in FIG. 10 occupies a fixed quantity of pieces of storage space, in other words, a quantity of pieces of storage space occupied by the state record set is equal to a quantity of data flows that need to be transmitted by the switching device A, while in the fifth recording manner, because the switching device A records only information about an adjusted data flow and corresponding adjustment content, and adjustment of a send queue of a data flow may change in real time, a size of storage space occupied by the state record set in the fifth recording manner also changes in real time. For example, after the switching device A determines that the send queue of the data flow 1 is adjusted from the send queue 2 to the send queue 4, the state record set includes only the data flow 1 and adjustment content corresponding to the data flow 1; after the switching device A determines that the send queue of the data flow 2 is adjusted from the send queue 4 to the send queue 1, adjustment content corresponding to the data flow 2 is added to the state record set, as shown in FIG. 11. In FIG. 11, an example in which information about a data flow is a number of a send queue is used. If information about a data flow is represented by using a priority of the data flow, a specific form of the state record set is similar to that in FIG. 11, and details are not described herein again.

### Sixth recording manner:

The switching device A may alternatively record each send queue and corresponding adjustment content by using a plurality of state record subsets.

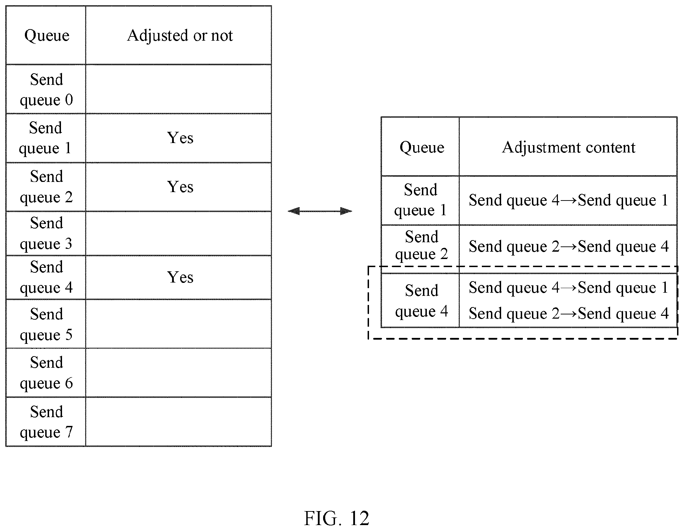

For example, two state record subsets may be used for recording. A first state record subset is used to record whether a data flow in each send queue is adjusted. As shown in FIG. 12, the first state record subset includes two columns. Information about each send queue is recorded in the first column. For example, the information may be a number of the send queue, or may be a priority of the send queue. Whether the data flow in the send queue is adjusted is recorded in the second column. The first state record subset fixedly occupies eight pieces of storage space. When no data flow is adjusted in a send queue, "null" or "none" may be recorded in a location that is in the second column and that corresponds to the send queue, or no record may be made. As shown in FIG. 12, when the send queue of the data flow 1 is adjusted from the send queue 2 to the send queue 4, that the send queue 2 is adjusted and that the send queue 4 is adjusted are separately recorded in the first state record subset; when the send queue of the data flow 2 is adjusted from the send queue 4 to the send queue 1, that the send queue 1 is adjusted is recorded in the first state record set. The second state record subset is used to record adjustment content corresponding to an adjusted send queue. As shown in FIG. 12, the second state record subset also includes two columns. Information about each send queue is recorded in the first column. For example, the information may be a number of the send queue, or may be a priority of the send queue. Adjustment content corresponding to the send queue is recorded in the second column. Because the send queue of the data flow 1 is adjusted from the send queue 2 to the send queue 4 and the send queue of the data flow 2 is adjusted from the send queue 4 to the send queue 1, adjustment content corresponding to the send queue 2, adjustment content corresponding to the send queue 4, and adjustment content corresponding to the send queue 1 are separately recorded in the second state record set.

### Seventh recording manner:

In the switching device A, if a packet of a data flow is stored in a send queue, the switching device A stores a packet descriptor corresponding to the packet in a memory. If the switching device A obtains the sixth packet of the data flow 1, it is determined that the send queue of the data flow 1 is adjusted from the send queue 2 to the send queue 4, so that the sixth packet of the data flow 1 and a subsequent packet of the data flow 1 are stored in the send queue 4. In this case, the switching device A may add switching flags to packet descriptors of the fifth and the sixth packets of the data flow 1, for example, may add bits or character strings to the packet descriptors, to represent that the send queue of the data flow corresponding to the packet is adjusted. The switching device A then counts switching flags in each send queue by using a counter. In this case, the state record set may include two columns. Information about each send queue is recorded in the first column. For example, the information may be a number of the send queue, or may be a priority of the send queue. A value of the counter corresponding to the send queue is recorded in the second column.

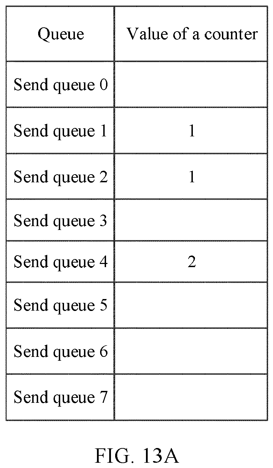

As shown in FIG. 13A, using an example in which information about a send queue is a number of the send queue, when the send queue of the data flow 1 is adjusted from the send queue 2 to the send queue 4, values of the counter corresponding to the send queue 2 and the send queue 4 are 1 in the state record set; when the send queue of the data flow 2 is adjusted from the send queue 4 to the send queue 1, a value of the counter corresponding to the send queue 1 is recorded as 1 in the state record set, and the value of the counter corresponding to the send queue 4 is increased by 1, so that the value of the counter corresponding to the send queue 4 is 2.

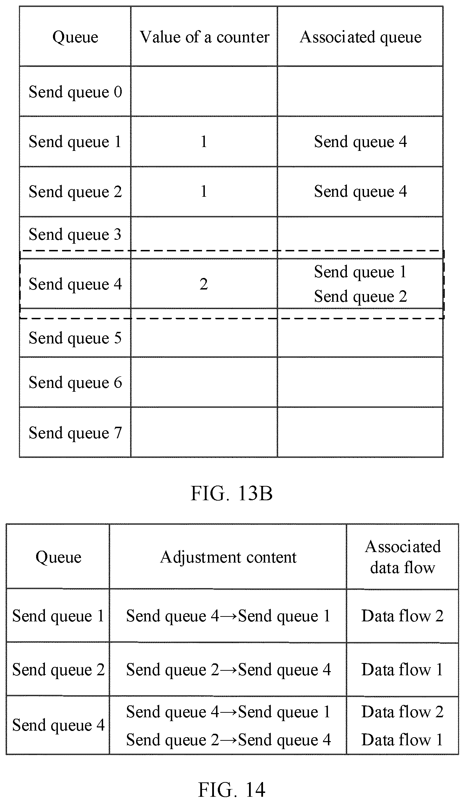

In this case, the third column may be further added to the state record set, to record information about a send queue associated with each switching flag. For example, when the send queue of the data flow 1 is adjusted from the send queue 2 to the send queue 4, information about the send queue 4 may be added to the third column corresponding to the send queue 2, for example, the information may be a number or a priority of the send queue 4, as shown in FIG. 13B. In FIG. 13B, an example in which the information about the send queue 4 is a queue number is used.

### Eighth recording manner:

In the first to the third recording manners, and the sixth and the seventh recording manners, information about an adjusted data flow may be further added to the state record set. For example, the third column may be added to the state record set, to record identification information of the adjusted data flow. The identification information may be a number of the data flow, or may be a priority of the data flow. Using the third recording manner as an example, the third column is added to the state record set, and a number of the data flow is recorded in the third column, as shown in FIG. 14.

It should be noted that the foregoing eight recording manners are merely examples of the state record set, and the state record set may alternatively be in another form. This is not limited in this embodiment of this application.

Step 304: The switching device A updates the state record set.

As packets in send queues of the switching device A are continuously sent to the switching device B, adjustment content of a send queue or a data flow recorded in the state record set may change. For example, after five packets of the data flow 1 stored in the send queue 2 are all sent to the switching device B, a process of adjusting the send queue for the data flow 1 is completed. In this case, the switching device A needs to update the state record set in a timely manner.

The switching device A determines, by performing step 301 and step 302, to place the packet of the data flow corresponding to the first queue into the second queue different from the first queue. After the switching device A records the adjustment content in the state record set by performing step 303, if the switching device A determines that the first queue has no packet belonging to the data flow, the switching device A deletes the adjustment content from the state record set or changes the state record set.

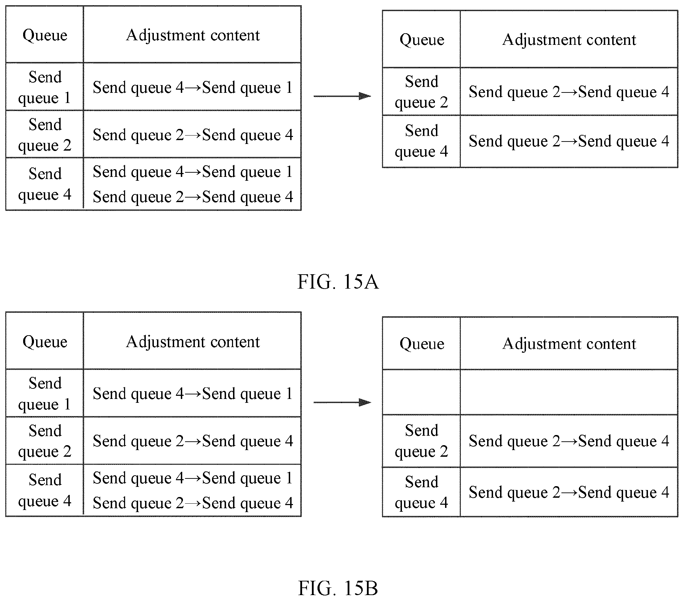

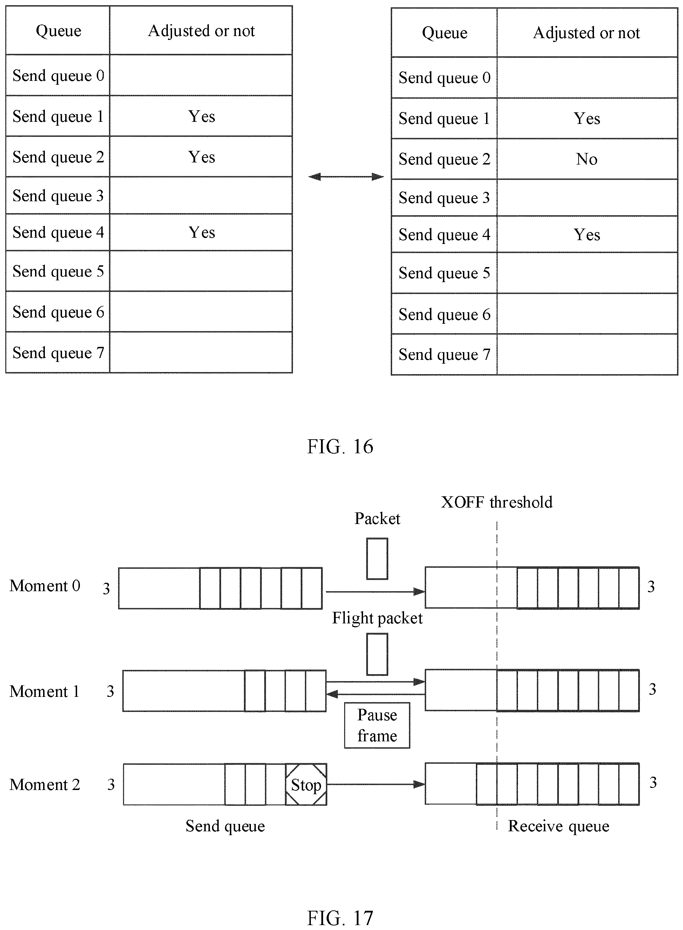

It should be noted that a definition of the first queue is the same as that in step 303, and details are not described herein again. The deleting, by the switching device A, the adjustment content from the state record set includes: changing a quantity of rows of the state record set or clearing corresponding adjustment content without changing a quantity of rows of the state record set. Using the state record set shown in FIG. 9A as an example, when the send queue of the data flow 2 does not need to be adjusted, the switching device A directly deletes a record corresponding to the send queue 1, to change the quantity of rows of the state record set from three to two, as shown in FIG. 15A; or clears a record corresponding to the send queue 1 without changing the quantity of rows of the state record set, as shown in FIG. 15B. The changing, by the switching device A, the state record set includes: modifying, to a second flag used to indicate that the first queue is not switched, a first flag that is in the state record set and that is used to indicate that the first queue is being switched; or modifying, to a second flag used to indicate that a data flow in the first queue is not switched, a first flag that is in the state record set and that is used to indicate that a data flow in the first queue is being switched. In this embodiment of this application, "being switched" means that a send queue of a data flow is adjusted from the queue to another queue, or a send queue of a data flow is adjusted from another queue to the queue, and "not switched" means that a send queue of a data flow is not adjusted. For example, using the state record set shown in FIG. 12 as an example, when the send queue of the data flow 1 needs to be adjusted, information that is in the state record set and that is used to indicate whether the send queue 2 and the send queue 4 are adjusted is yes; when the send queue of the data flow 1 does not need to be adjusted, information that is in the state record set and that is used to indicate whether the send queue 2 is adjusted is changed to no, as shown in FIG. 16.

In this embodiment of this application, the switching device A may update the state record set based on information that is recorded in the state record set and that is about a data flow whose send queue needs to be adjusted, for example, a number of the data flow or a priority of the data flow.

For example, the data flow 1 is used as an example for description. Still refer to FIG. 5A. When the switching device

A determines that the send queue of the data flow 1 needs to be adjusted, the switching device A collects statistics on a quantity of packets that belong to the data flow 1 and that are in an original send queue (that is, the send queue 2) of the data flow 1. As shown in FIG. 5A, in the send queue 2, there are a total of five packets that belong to the data flow 1. In this case, after sending the five packets of the data flow 1 from the send queue 2, the switching device A determines that the send queue of the data flow 1 does not need to be adjusted. Therefore, the foregoing manner may be used to update information that is related to the data flow 1 and that is in the state record set.

For another example, still referring to FIG. 5A, each packet of a data flow may carry a number of the packet, for example, a packet 1 or a packet 2. In this case, the switching device A places the sixth packet of the data flow 1 into the send queue 4, and the sixth packet is the first packet that belongs to the data flow 1 and that is in the send queue 4. Therefore, the switching device A can learn that five packets are stored in an original send queue (that is, the send queue 2) of the data flow 1, so that after sending the fifth packet of the data flow 1 to the switching device B by using the send queue 2, the switching device A determines that the send queue of the data flow 1 does not need to be adjusted. Therefore, the foregoing manner may be used to update information that is related to the data flow 1 and that is in the state record set.

Another example corresponds to the seventh recording manner in step 303. The data flow 1 is still used as an example. If the switching device A adds a switching flag to a packet descriptor of the fifth packet of the data flow 1, and the switching flag may indicate that the data flow to which the packet belongs is adjusted from the send queue 2 to the send queue 4, when the switching device A sends the fifth packet, the switching device A can learn from the switching flag of the fifth packet that switching of the data flow 1 is completed. In this case, the values of the counter corresponding to the send queue 2 and the send queue 4 in the state record set are decreased by 1, and information about the associated queue is deleted, so that the value of the counter corresponding to the send queue 2 is changed to 0 in the state record set. When the value of the counter is 0, it indicates that switching of the data flow is completed. It should be noted that step 302 to step 304 are optional steps, in other words, are not mandatory steps.

Step 305: The switching device B sends a pause frame to the switching device A, and the switching device A receives the pause frame.

In this embodiment of this application, manners in which the switching device B sends the pause frame to the switching device A may include but are not limited to the following three manners.

### First sending manner:

Because a quantity of packets that can be buffered in a receive queue of the switching device B is limited, to prevent a buffer overflow, when a quantity of packets buffered in any receive queue of the switching device B exceeds a specific threshold, where the threshold may be an XOFF threshold, the switching device B sends a pause frame to the switching device A. The pause frame may be a priority-based flow control (priority-based flow control, PFC) pause frame. Then, sending of a packet in a corresponding send queue in the switching device A is suspended based on the pause frame. As shown in FIG. 17, when a quantity of packets buffered in a receive queue 3 of the switching device B exceeds the XOFF threshold, the switching device B sends a PFC pause frame to the switching device A, to instruct the switching device A to suspend sending of a packet in the send queue 3, thereby reducing packet loss problems caused by a receive buffer overflow.

In a specific implementation process, after the switching device B sends the pause frame to the switching device A, it takes a period of time for the pause frame to reach the switching device A, and the switching device A also needs a period of time to process the pause frame. Therefore, in this period of time, a packet of the data flow continues to be sent to the switching device B in the send queue of the switching device A. In this case, such a packet is referred to as a flight packet. Therefore, in a receive queue of the switching device B, a buffer needs to be reserved for the send queue, to store the flight packet before the pause frame takes effect, as shown in FIG. 17. A value of the XOFF threshold is determined based on the reserved buffer.

### Second sending manner:

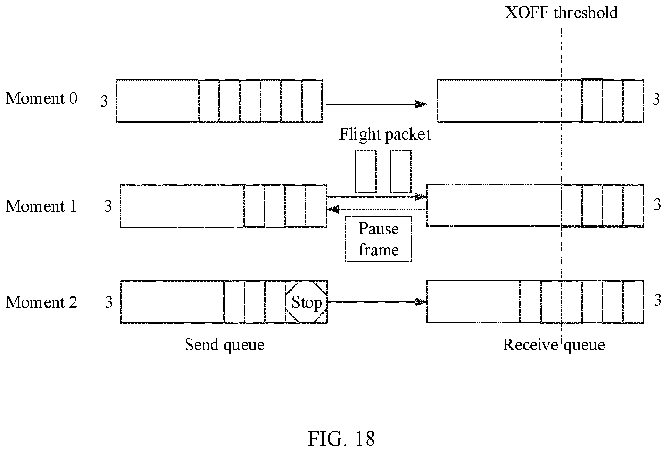

To further reduce packet loss problems caused by an overflow of packets in a receive buffer queue, a value of the XOFF threshold in the switching device B may be decreased, as shown in FIG. 18. In this way, more buffers can be reserved in the switching device B, to further ensure that after the switching device B sends the pause frame, the received flight packet does not cause a buffer overflow and packet loss.

However, because the XOFF threshold is lowered, a quantity of packets buffered in a receive queue exceeds the XOFF threshold more easily, and consequently, sending of the pause frame is triggered. As a result, a quantity of interruptions in a data transmission process is increased, and data flow transmission efficiency is affected.

### Third sending manner:

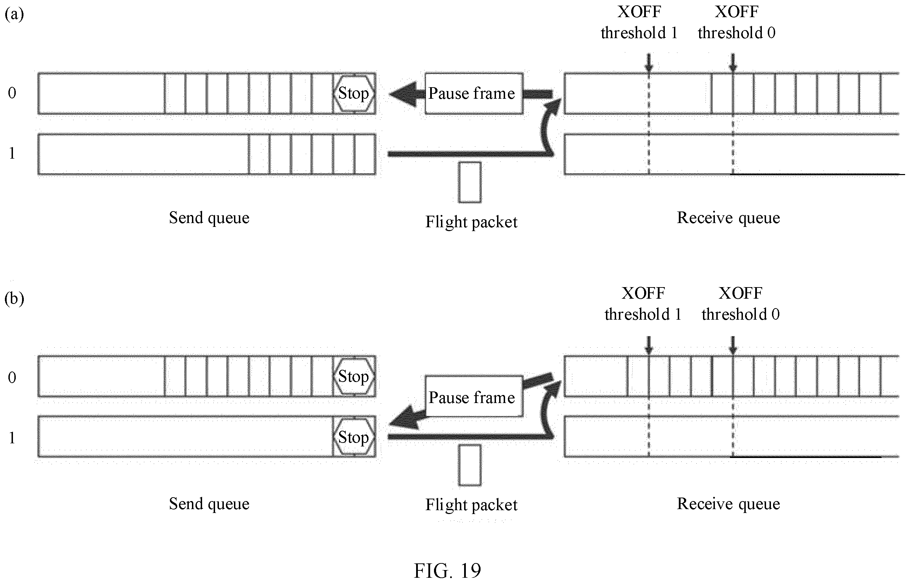

A plurality of XOFF thresholds may be set in the switching device B. As shown in FIG. 19, the switching device A sends a packet of a data flow to the switching device B by using the send queue 0 and the send queue 1, and the switching device B sets different XOFF thresholds for the send queue 0 and the queue 1 respectively. An XOFF threshold 0 corresponds to the send queue 0, an XOFF threshold 1 corresponds to the send queue 1, and the threshold 0 is less than the threshold 1. When a quantity of backlogged packets in any receive queue in the switching device B exceeds the XOFF threshold 0, the switching device B sends, to the switching device A, a pause frame used to suspend the send queue 0. Because a send queue into which a packet of a data flow is placed may be changed in a transmission process of the packet, if a send queue of a data flow in the send queue 1 is adjusted from the send queue 1 to the send queue 0, the send queue 1 is not affected in this case, and therefore, the switching device A continues to send a packet to the switching device B by using the send queue 1. When packets in the receive queue continue to be backlogged and exceed the XOFF threshold 1, the switching device B sends, to the switching device A again, a pause frame used to suspend the send queue 1, thereby avoiding a buffer overflow and a packet loss problem caused by remaining data in the send queue 1.

However, as the switching device B needs to continuously send different pause frames to suspend different send queues, a quantity of pause frames in the network system significantly increases. This affects overall performance of the network system, such as network bandwidth and hardware processing efficiency. Moreover, when the switching device A and the switching device B communicate with each other through more virtual channels, for example, eight virtual channels are used for communication, a configuration process of this method is more complex, and a larger quantity of pause frames also has relatively serious impact on performance of the network system.

Certainly, the switching device B may alternatively send the pause frame to the switching device A in another manner. This is not limited in this embodiment of this application.

In this embodiment of this application, the pause frame is used to instruct the switching device A to suspend sending of a packet in a first queue in the at least two queues. It should be noted that, in this case, the first queue is in a specific sense, to be specific, the first queue is a send queue corresponding to a receive queue in which a quantity of buffered packets exceeds the XOFF threshold. For example, still referring to FIG. 4A, a quantity of packets buffered in the receive queue 4 of the switching device B exceeds the XOFF threshold. In this case, the switching device B sends, to the switching device A, a pause frame used to suspend sending of a packet in the send queue 4.

In addition, if priorities are set for the send queue and the receive queue respectively, the pause frame may also be used to instruct the switching device A to suspend sending of a packet in a send queue with a specific priority. When one priority corresponds to a plurality of send queues, the pause frame is used to suspend the plurality of send queues corresponding to the priority.

Step 306: The switching device A suspends sending of a packet in the first queue, and suspends sending of a packet in a second queue.

In this embodiment of this application, some packets in the first queue and some packets in the second queue belong to a same data flow.

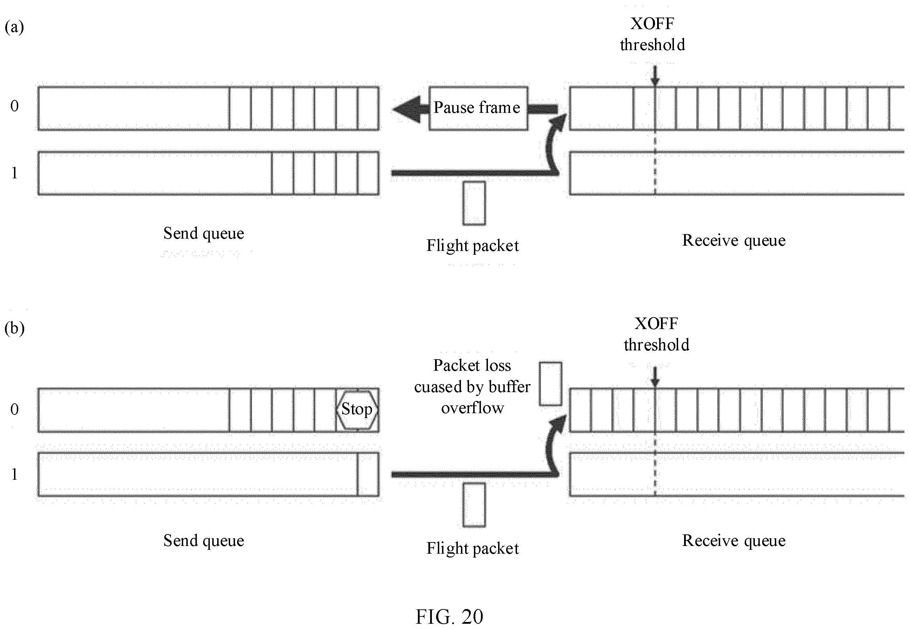

In a process of adjusting a send queue of a packet of a data flow, as shown in FIG. 20, the send queue of the data flow is adjusted from the send queue 1 to the send queue 0. Before adjustment of the send queue of the data flow is completed, because a quantity of packets buffered in the receive queue 0 of the switching device B exceeds the XOFF threshold, the switching device B sends, to the switching device A, the pause frame used to suspend sending of the packet in the send queue 0. Because the pause frame instructs to suspend the send queue 0, the packet can still be sent in the send queue 1. However, because a buffer reserved in the receive queue 1 is almost used up after a flight packet in a sending period of the pause frame is stored, when a packet continues to be sent to the receive queue 0 of the switching device B in the send queue 1, a buffer overflow occurs, causing loss of a large quantity of packets. Therefore, in this embodiment of this application, after receiving the pause frame sent by the switching device B, the switching device A parses the pause frame to obtain information about the first queue that is indicated in the pause frame and that needs to be suspended. Then, the switching device A suspends sending of a packet in the first queue indicated in the pause frame, and suspends sending of a packet in the second queue related to the first queue. For ease of description, the following uses suspending a queue to replace suspending sending of a packet in the queue.

In this embodiment of this application, there are a plurality of manners of suspending the second queue by the switching device A. For example, the switching device A determines, based on historical usage data, that the data flow in the second queue usually needs to be adjusted to the first queue for sending. Therefore, after receiving the pause frame for suspending the first queue, the switching device A directly suspends both the first queue and the second queue.

For example, this embodiment of this application provides a manner of suspending the second queue. Details are as follows:
The switching device A determines, by querying a first state record set, to suspend the second queue, where the first state record set is used to record that some packets in the first queue and some packets in the second queue belong to a same data flow.

Specifically, after receiving the pause frame used to suspend the first queue, the switching device A queries the first state record set in the switching device A. If it is recorded in the first state record set that a send queue of a data flow is adjusted from the first queue to the second queue or a send queue of a data flow is adjusted from the second queue to the first queue, it indicates that some packets in the first queue and some packets in the second queue belong to a same data flow.

It should be noted that in this embodiment of this application, the first state record set is a part or all of a state record set that is in the state record set in step 303 and that includes the first queue or adjustment content of a data flow in the first queue.

Specifically, because forms of the state record set in step 303 are different, manners in which the switching device A queries the first state record set include but are not limited to the following two manners. In the following descriptions, an example in which the first queue is the send queue 4 is used for description.

### First querying manner:

The switching device A determines, in a second state record set, the first state record set corresponding to the first queue.

In this embodiment of this application, the second state record set is the state record set in step 303. The first state record set is used to record adjustment content that a priority is the first queue. The adjustment content is used to indicate that some packets in the first queue and some packets in the second queue belong to a same data flow.

If the state record set is shown in FIG. 6A, the switching device A queries the state record set to find out whether the state record set includes the send queue 4. Because both records in the state record set include the send queue 4, all state record sets shown in FIG. 6A are the first state record set. An association relationship between the send queue 4 and the send queue 2 and an association relationship between the send queue 4 and the send queue 1 are recorded in the first state record set. Therefore, the switching device A determines, based on the first state record set, that the second queues are the send queue 2 and the send queue 1.

If the state record set is shown in FIG. 8A, the switching device A first determines the first state record set by using a number of the send queue 4, where the first state record set is a subset included in a dashed-line box in FIG. 8A. Then, the switching device A determines, based on adjustment content recorded in the first state record subset, that the second queues are the send queue 2 and the send queue 1.

If the state record set is shown in FIG. 12, the switching device A first determines, by using a number of the send queue 4, whether the send queue 4 is adjusted. If the send queue 4 is adjusted, the switching device A determines, by using the number of the send queue 4 again, the first state record set from a table shown on the right of FIG. 12, and the first state record set is a subset included in a dashed-line box in FIG. 12. Then, the switching device A determines, based on adjustment content recorded in the first state record subset, that the second queues are the send queue 2 and the send queue 1.

If the state record set is shown in FIG. 13B, the switching device A first determines, by using a number of the send queue 4, whether a value of a counter corresponding to the send queue 4 is greater than 0. If the value is greater than 0, the switching device A determines the first state record set from FIG. 13B by using the number of the send queue 4 again, and the first state record set is a subset included in a dashed-line box in FIG. 13B. Then, the switching device A determines, based on adjustment content recorded in the first state record subset, that the second queues are the send queue 2 and the send queue 1.

It should be noted that, when a priority is used as identification information of a send queue in the state record set, the switching device A first determines the priority of the send queue 4, and then determines the first state record subset and the second queue in the same manner described above. Details are not described herein again.

### Second querying manner:

The switching device A determines, in a second state record set, the first state record set corresponding to a data flow in the first queue.

In this embodiment of this application, the second state record set is the state record set in step 303. The first state record set is used to record adjustment content of a first data flow, and the adjustment content is used to indicate that packets of the first data flow are stored in the first queue and the second queue separately.

If the state record set is shown in FIG. 10, the switching device A further needs to record information about a data flow transmitted in each send queue. For example, a relationship recorded by the switching device A is as follows: A data flow transmitted in the send queue 2 is the data flow 1, and data flows transmitted in the send queue 4 are the data flow 1 and the data flow 2. Therefore, the switching device A determines that data flows transmitted in the send queue 4 are the data flow 1 and the data flow 2, and then obtains adjustment content of the data flow 1 and the data flow 2 from the state record set. In this case, a subset included in a dashed-line box of the state record set shown in FIG. 10 is the first state record set. An association relationship between the send queue 4 and the send queue 2 and an association relationship between the send queue 4 and the send queue 1 are recorded in the first state record set. Therefore, the switching device A determines, based on the first state record set, that the second queues are the send queue 2 and the send queue 1.

When the state record set is shown in FIG. 11, a manner in which the switching device A determines the first state record subset and the second queue is the same as the foregoing manner. Details are not described herein again.

It should be noted that, in the foregoing descriptions, an example in which the second queues are two send queues is used. Alternatively, the two second queues may be understood as a second queue and a third queue, and the switching device A may suspend the first queue, the second queue, and the third queue based on the pause frame. Certainly, the second queue may be one send queue, or the second queues may be two or more send queues. A quantity of second queues is not limited in this embodiment of this application.

In addition, it should be noted that, when the switching device A determines, by querying the first state record set, that there is no second queue, the switching device A may suspend only the first queue.

For example, the pause frame may alternatively instruct to suspend sending of a packet in a send queue with a specific priority. For ease of description, the pause frame is used to instruct to suspend sending of a packet in a send queue whose priority is a first priority. In this case, after receiving the pause frame, the switching device A may use the following three processing manners.

### First processing manner:

The switching device A may first determine the send queue corresponding to the priority, and then determine, based on adjustment content of the send queue, which send queues need to be suspended.

For example, the first priority is a priority 1. After receiving the pause frame, the switching device A first determines that a send queue whose priority is 1 is the send queue 1. Then, the switching device A determines, by using one of the foregoing two querying manners, that the send queue 2 and the send queue 1 store packets of a same data flow. In this case, the switching device A determines to suspend sending of packets in the send queue 1 and the send queue 2. For another example, the first priority is a priority 1. After receiving the pause frame, the switching device A first determines that send queues whose priorities are 1 are the send queue 1 and the send queue 2. Then, the switching device A determines, by using one of the foregoing two querying manners, a send queue associated with the send queue 1 and a send queue associated with the send queue 2. For example, the switching device A determines that the send queue 1 and the send queue 3 store packets of a same data flow, and determines that the send queue 2 and the send queue 4 store packets of a same data flow. In this case, the switching device A determines to suspend sending of packets in the send queue 1, the send queue 2, the send queue 3, and the send queue 4.

### Second processing manner:

Adjustment content corresponding to each priority is recorded in the second state record set in the switching device A. The second state record set may be the state record set shown in FIG. 7A and FIG. 7B, FIG. 8B, or FIG. 9B. In this way, after receiving the pause frame, the switching device A determines, based on the first state record set that is in the second state record set and that corresponds to the first priority, that priorities of the send queues that need to be suspended are the first priority and a second priority, and then suspends sending of packets in all send queues whose priorities are the first priority and the second priority. For example, the first priority is a priority 1. After receiving the pause frame, the switching device A determines, by using one of the foregoing two querying manners, that a send queue with the priority 1 and a send queue with a priority 4 store packets of a same data flow. Then, the switching device A determines that send queues whose priorities are the priority 1 are the send queue 1 and the send queue 2, and that send queues whose priorities are the priority 4 are the send queue 4 and the send queue 5, so that the switching device A determines to suspend sending of packets in the send queue 1, the send queue 2, the send queue 4, and the send queue 5.

In this embodiment of this application, regardless of whether the pause frame instructs to suspend sending of a packet in a send queue or instructs to suspend sending of a packet in a send queue corresponding to a specific priority, the switching device A needs to query the state record set, to determine whether there is another send queue associated with the send queue indicated in the pause frame, and if there is another send queue associated with the send queue indicated in the pause frame, the switching device A needs to suspend sending of a packet in the another determined send queue. A specific querying manner is the same as the manner described above. It may be understood that, the another send queue being associated with the send queue indicated in the pause frame means that the send queue indicated in the pause frame and the another send queue store packets of a same data flow.

Step 307: The switching device A resumes sending of the packets in the first queue and the second queue.

In this embodiment of this application, the pause frame sent by the switching device B may further carry pause duration. For example, the pause duration is 1 millisecond. After receiving the pause frame, the switching device A counts pause time, and when determining that duration for suspending sending of the packets in the first queue and the second queue is greater than or equal to duration indicated in the pause frame, resumes sending of the packets in the first queue and the second queue.

Certainly, after the switching device B sends the pause frame to the switching device A, when a quantity of packets buffered in a receive queue of the switching device B is less than a specific threshold, for example, the threshold may be an XON threshold, the switching device B may send another pause frame to the switching device A, and set pause duration in the pause frame to 0. In this way, after receiving the pause frame in which the pause duration is 0, the switching device A resumes sending of the packets in the first queue and the second queue.

It should be noted that step 307 is an optional step, in other words, is not a mandatory step.

In the foregoing technical solution, after receiving the pause frame, the first node automatically applies, based on adjustment information that is of a send queue of a data flow and that is recorded in the state record set, the pause frame to all queues associated in an adjustment process of the send queue of the data flow. In this way, a packet loss problem in a data transmission process can be avoided without adjusting an XOFF/XON threshold of a receive queue and without increasing a quantity of pause frames in the network system, thereby improving reliability of the data flow in the transmission process. In addition, the method is convenient and easy to implement and is applicable to a scenario in which a data flow switches between more queues.

In the foregoing embodiment provided in the present invention, the method provided in the embodiment of this application is described from a perspective of interaction between the first node and the second node. To implement functions in the method provided in the foregoing embodiment of this application, the first node may include a hardware structure and/or a software module, to implement the foregoing functions by using the hardware structure, the software module, or a combination of the hardware structure and the software module. Whether a function in the foregoing functions is performed by using the hardware structure, the software module, or a combination of the hardware structure and the software module depends on a specific application and a design constraint of the technical solution.

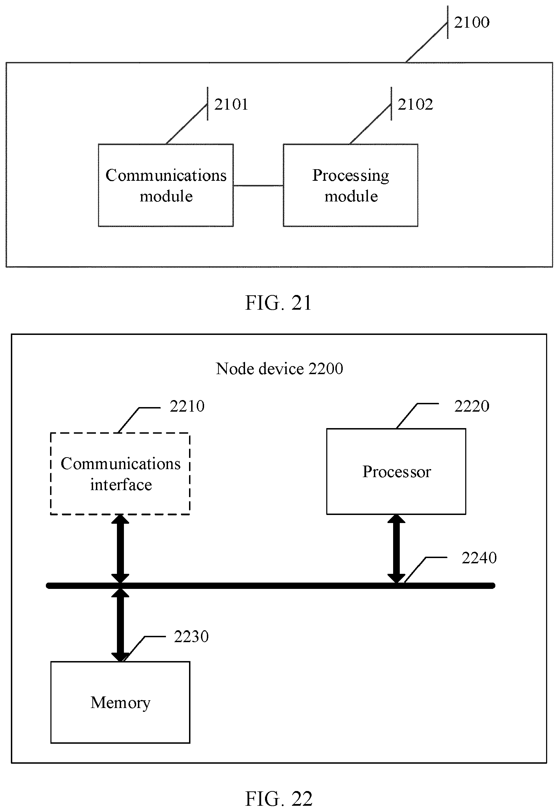

FIG. 21 is a schematic structural diagram of a node device 2100. The node device 2100 may be a first node, and can implement functions of the first node in the method provided in the embodiments of this application. Alternatively, the node device 2100 may be an apparatus that can support the first node in implementing functions of the first node in the method provided in the embodiments of this application. The node device 2100 may be a hardware structure, a software module, or a combination of a hardware structure and a software module. The node device 2100 may be implemented by a chip system. In this embodiment of the present invention, the chip system may include a chip, or may include a chip and another discrete device.

The node device 2100 may include a communications module 2101 and a processing module 2102.

The communications module 2101 may be configured to: perform step 301, step 305, and step 307 in the embodiment shown in FIG. 3, and/or support another process of the technology described in this specification. The communications module 2101 is configured to implement communication between the node device 2100 and another module. The another module may be a circuit, a component, an interface, a bus, a software module, a transceiver, or any other apparatus that is capable of implementing communication.

The processing module 2102 may be configured to: perform step 302 to step 304, step 306, and step 307 in the embodiment shown in FIG. 3, and/or support another process of the technology described in this specification.

All related content of the steps in the foregoing method embodiment may be cited in function descriptions of corresponding function modules. Details are not described herein again.

In this embodiment of the present invention, division into the modules is an example, is merely logical function division, and may be other division during actual implementation. In addition, function modules in the embodiments of the present invention may be integrated into one processor, or each of the modules may exist alone physically, or two or more modules may be integrated into one module. The integrated module may be implemented in a form of hardware, or may be implemented in a form of a software function module.

FIG. 22 shows a node device 2200 provided in an embodiment of this application. The node device 2200 may be the first node in the embodiment shown in FIG. 3, and can implement functions of the first node in the method provided in the embodiment of FIG. 3 of this application. Alternatively, the node device 2200 may be an apparatus that can support the first node in implementing functions of the first node in the method provided in the embodiment shown in FIG. 3 of this application. The node device 2200 may be a chip system. In this embodiment of the present invention, the chip system may include a chip, or may include a chip and another discrete device.

The node device 2200 includes at least one processor 2220, configured to implement or support the node device 2200 in implementing the functions of the first node in the method provided in the embodiment shown in FIG. 3 of this application. For example, the processor 2220 may determine to change a send queue into which a data flow is placed, or generate a state record set. For details, refer to detailed descriptions in the method example. The details are not described herein again.

The node device 2200 may further include at least one memory 2230, configured to store a program instruction and/or data. The memory 2230 is coupled to the processor 2220. Couplings in the embodiments of this application are indirect couplings or communication connections between apparatuses, units, or modules, may be electrical, mechanical, or in another form, and are used for information exchange between the apparatuses, the units, and the modules. The processor 2220 may operate in cooperation with the memory 2230. The processor 2220 may execute the program instruction stored in the memory 2230. At least one of the at least one memory may be included in the processor. When executing the program instruction in the memory 2230, the processor 2220 may implement the method shown in FIG. 3.

The node device 2200 may further include a communications interface 2210, configured to communicate with another device through a transmission medium, so that an apparatus used in the node device 2200 can communicate with the another device. For example, the another device may be a second node. The processor 2220 may send and receive data by using the communications interface 2210.

This embodiment of this application does not limit a specific connection medium between the communications interface 2210, the processor 2220, and the memory 2230. In this embodiment of this application, the memory 2230, the processor 2220, and the communications interface 2210 are connected by using a bus 2240 in FIG. 22. In FIG. 22, the bus is represented by a thick line. A manner of connection between other components is merely an illustrative description rather than a limitation. The bus may be classified into an address bus, a data bus, a control bus, and the like. For ease of representation, only one thick line is used to represent the bus in FIG. 22, but this does not mean that there is only one bus or only one type of bus.

In this embodiment of this application, the processor 2220 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in the embodiments of this application. The general-purpose processor may be a microprocessor or any conventional processor or the like. The steps of the method disclosed with reference to the embodiments of the present invention may be directly performed by a hardware processor, or may be performed by using a combination of hardware in the processor and a software module.

In this embodiment of this application, the memory 2230 may be a non-volatile memory such as a hard disk drive (hard disk drive, HDD) or a solid-state drive (solid-state drive, SSD), or may be a volatile memory (volatile memory) such as a random-access memory (random-access memory, RAM). The memory is any other medium that can be configured to carry or store expected program code in a form of an instruction or a data structure and that is accessible to a computer, but is not limited thereto. The memory in this embodiment of this application may alternatively be a circuit or any other apparatus that can implement a storage function, and is configured to store a program instruction and/or data.

An embodiment of this application further provides a computer-readable storage medium including an instruction. When the instruction is run on a computer, the computer is enabled to perform the method performed by the first node in the embodiment shown in FIG. 3.

An embodiment of this application further provides a computer program product including an instruction. When the computer program product is run on a computer, the computer is enabled to perform the method performed by the first node in the embodiment shown in FIG. 3.

An embodiment of this application provides a chip system. The chip system includes a processor, may further include a memory, and is configured to implement functions of the first node in the foregoing method. The chip system may include a chip, or may include a chip and another discrete device.

All or some of the foregoing methods in the embodiments of this application may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, the procedures or functions according to the embodiments of this application are completely or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL for short)) or wireless (for example, infrared, radio, or a microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

Apparently, a person skilled in the art can make various modifications and variations to this application without departing from the scope of this application. This application is intended to cover these modifications and variations of this application provided that these modifications and variations fall within the scope of the claims of this application and equivalent technologies thereof.

## Claims

1. A packet control method, comprising:
sending, by a first node, a packet of a data flow to a second node by using at least two queues;
receiving, by the first node, a pause frame from the second node, wherein the pause frame is used to instruct to suspend sending of a packet in a first queue in the at least two queues; and
suspending, by the first node, sending of the packet in the first queue, and suspending sending of a packet in a second queue, wherein some packets in the first queue and some packets in the second queue belong to a same data flow.

2. The method according to claim 1, wherein the at least two queues comprise at least two priorities, a priority of the first queue is a first priority, a priority of the second queue is a second priority, and the first priority is different from the second priority.

3. The method according to claim 1 or 2, wherein the suspending, by the first node, sending of a packet in a second queue comprises:
querying, by the first node, a first state record set, wherein the first state record set is used to record that some packets in the first queue and some packets in the second queue belong to a same data flow; and
suspending, by the first node, sending of the packet in the second queue based on the first state record set.

4. The method according to claim 3, wherein the querying, by the first node, a first state record set comprises:
determining, by the first node in a second state record set, the first state record set corresponding to the first queue.

5. The method according to claim 3, wherein the querying, by the first node, a first state record set comprises:
determining, by the first node in a second state record set, the first state record set corresponding to a data flow in the first queue.

6. The method according to any one of claims 3 to 5, wherein the first state record set is further used to record that some packets in the first queue and some packets in a third queue belong to a same data flow, and the method further comprises:
suspending, by the first node, sending of a packet in the third queue.

7. The method according to any one of claims 3 to 6, wherein before the querying, by the first node, a state record set, the method further comprises:
obtaining, by the first node, a packet, wherein a data flow to which the packet belongs corresponds to the first queue; and
recording, by the first node, the first state record set if the first node stores the packet in the second queue, and the second queue has no packet of the data flow to which the packet belongs; or
obtaining, by the first node, a packet, wherein a data flow to which the packet belongs corresponds to the second queue; and
recording, by the first node, the first state record set if the first node stores the packet in the first queue, and the first queue has no packet of the data flow to which the packet belongs.

8. The method according to claim 7, wherein the method further comprises:
after the first node stores the packet in the second queue, if the first queue has no packet belonging to the data flow to which the packet belongs, deleting, by the first node, the first state record set from the second state record set or changing, by the first node, the first state record set; or
after the first node stores the packet in the first queue, if the second queue has no packet belonging to the data flow to which the packet belongs, deleting, by the first node, the first state record set from the second state record set or changing, by the first node, the first state record set, wherein
the changing, by the first node, the first state record set comprises:
modifying a first flag in the first state record set to a second flag, wherein the first flag is used to indicate that the first queue is being switched, and the second flag is used to indicate that the first queue is not switched; or
modifying a first flag in the first state record set to a second flag, wherein the first flag is used to indicate that a data flow in the first queue is being switched, and the second flag is used to indicate that a data flow in the first queue is not switched.

9. The method according to any one of claims 1 to 8, wherein after the suspending, by the first node, sending of the packet in the first queue, and suspending sending of a packet in a second queue, the method further comprises:
determining, by the first node, that duration for suspending sending of the packets in the first queue and the second queue is greater than or equal to duration indicated in the pause frame; and
resuming, by the first node, sending of the packets in the first queue and the second queue.

10. A node device, comprising a communications module and a processing module, wherein
under control of the processing module, the communications module sends a packet of a data flow to a second node by using at least two queues;
the communications module receives a pause frame from the second node under control of the processing module, wherein the pause frame is used to instruct to suspend sending of a packet in a first queue in the at least two queues; and
the processing module suspends sending of the packet in the first queue, and suspends sending of a packet in a second queue, wherein some packets in the first queue and some packets in the second queue belong to a same data flow.

11. The device according to claim 10, wherein the processing module is configured to:
query a first state record set, wherein the first state record set is used to record that some packets in the first queue and some packets in the second queue belong to a same data flow; and
suspend sending of the packet in the second queue based on the first state record set.

12. The device according to claim 11, wherein the processing module is configured to:
determine, in a second state record set, the first state record set corresponding to the first queue.

13. The device according to claim 11, wherein the processing module is configured to:
determine, in a second state record set, the first state record set corresponding to a data flow in the first queue.

14. The device according to any one of claims 11 to 13, wherein the first state record set is further used to record that some packets in the first queue and some packets in a third queue belong to a same data flow, and the processing module is configured to:
suspend sending of a packet in the third queue.

15. The device according to any one of claims 11 to 14, wherein the processing module is configured to:
obtain a packet before the state record set is queried, wherein a data flow to which the packet belongs corresponds to the first queue; and
record the first state record set if the packet is stored in the second queue, and the second queue has no packet of the data flow to which the packet belongs; or
obtain a packet before the state record set is queried, wherein a data flow to which the packet belongs corresponds to the second queue; and
record the first state record set if the packet is stored in the first queue, and the first queue has no packet of the data flow to which the packet belongs.

16. The device according to claim 15, wherein the processing module is configured to:
after the packet is stored in the second queue, if the first queue has no packet belonging to the data flow to which the packet belongs, delete the first state record set from the second state record set or change the first state record set; or
after the packet is stored in the first queue, if the second queue has no packet belonging to the data flow to which the packet belongs, delete the first state record set from the state record set or change the first state record set, wherein
the changing the first state record set comprises:
modifying a first flag in the first state record set to a second flag, wherein the first flag is used to indicate that the first queue is being switched, and the second flag is used to indicate that the first queue is not switched; or
modifying a first flag in the first state record set to a second flag, wherein the first flag is used to indicate that a data flow in the first queue is being switched, and the second flag is used to indicate that a data flow in the first queue is not switched.

17. The device according to any one of claims 10 to 16, wherein the processing module is configured to:
after sending of the packet in the first queue is suspended, and sending of the packet in the second queue is suspended, determine that duration for suspending sending of the packets in the first queue and the second queue is greater than or equal to duration indicated in the pause frame; and
resume sending of the packets in the first queue and the second queue.

18. A computer-readable storage medium, wherein the computer-readable storage medium stores a computer program, the computer program comprises a program instruction, and when the program instruction is executed by a computer, the computer is enabled to perform the method according to any one of claims 1 to 9.

19. A computer program product, wherein the computer program product stores a computer program, the computer program comprises a program instruction, and when the program instruction is executed by a computer, the computer is enabled to perform the method according to any one of claims 1 to 9.
